# EUROPEAN PATENT APPLICATION

(11) **EP 4 821 981 A1**
(43) Date of publication of application: **14.10.2026**
(21) Application number: 25749033.4
(22) Date of filing: 24.01.2025
(51) Int. Cl.: C08L 23/0807, C08F 210/16, C08J 5/18, B29C 55/12

(54) **POLYETHYLENE COMPOSITION AND BIAXIALLY STRETCHED FILM COMPRISING SAME**

(30) Priority: 30.01.2024 KR 20240013787
(71) Applicant: LG Chem, Ltd., Seoul 07336 (KR)
(72) Inventor: LEE, Sanghwa, Daejeon 34122 (KR); CHOI, Eun Yeob, Daejeon 34122 (KR); SUNG, Yutaek, Daejeon 34122 (KR); YOU, Youngsuk, Daejeon 34122 (KR); KWON, Kyung An, Daejeon 34122 (KR); KIM, Taejin, Daejeon 34122 (KR); KIM, Inkyo, Daejeon 34122 (KR); KIM, Jonghyun, Daejeon 34122 (KR); JUNG, Jin, Daejeon 34122 (KR)
(74) Representative: Goddar, Heinz J.
(86) International application number: PCT/KR2025/001525
(87) International publication number: WO 2025/165130

(57) **Abstract**

Provided are a polyethylene composition and a biaxially stretched film comprising the same, which has excellent mechanical properties and stretching stability, along with outstanding film processability and productivity, suitable for producing a biaxially stretched film having high shrinking resistance, printability, and transparency.

## Description

### [TECHNICAL FIELD]

### CROSS-REFERENCE TO RELATED APPLICATION(S)

This application claims the benefit of Korean Patent Application Nos. 10-2024-0013787 and 10-2025-0011591, filed on January 30, 2024 and January 24, 2025 with the Korean Intellectual Property Office, respectively, the disclosures of which are incorporated herein by reference in their entirety.

The present disclosure relates to a polyethylene composition, which has excellent mechanical properties and stretching stability, along with outstanding film processability and productivity, suitable for producing a biaxially stretched film having high shrinking resistance, printability, and transparency, and a biaxially stretched film including the same.

### [BACKGROUND]

Thin film products made of linear low density polyethylene (LLDPE) and/or high density polyethylene (HDPE) are widely used in packaging such as merchandise bags, grocery bags, food and specialty packaging, and industrial liners. In these applications, a shrink film capable of packaging the product while maintaining its shape is mainly used to protect the product from being touched during display.

In particular, among these shrink films, biaxially stretched polymer films have excellent mechanical properties, productivity, and printability, and thus are widely used in packaging. Commercially available packaging films generally use BOPP (bi-axially oriented polypropylene), BOPET (biaxially-oriented polyethylene terephthalate) or BOPA (biaxially-oriented polyamide) for a printing layer, and use LLDPE for a sealing layer. These composite materials cannot be recycled, and the demand for a single material is increasing due to regulations on recycling of packaging materials. Therefore, research and development are being conducted to manufacture a single-material packaging film by replacing the film of the printing layer with a biaxially-oriented polyethylene (BOPE) film.

However, commercially available polyethylene (PE) resins do not have sufficient stretching stability, and phenomena such as breakage and melting occur during stretching, making it difficult to apply them to the biaxial stretching process. In order to secure stretching stability, a product in the form of a polyethylene composition containing a resin having a low density and a high melting index has been developed. However, the composition as described above is unsuitable as a polyethylene resin for biaxially stretched film due to low stiffness, shrinkage, and impact resistance. Moreover, their high processing viscosity may lead to poor film productivity and unfavorable film appearance due to the formation of fine patterns caused by high processing pressures.

Therefore, there is a need for a method of selecting a polyethylene resin having a molecular structure favorable to stretching and selecting an appropriate composition, thereby providing a polyethylene composition for biaxial stretching that exhibits excellent stretching stability, outstanding mechanical properties, and good film processability and productivity due to its low processing viscosity.

### [DETAILED DESCRIPTION OF THE INVENTION]

### [Technical Problem]

There are provided a polyethylene composition, which has excellent mechanical properties and stretching stability, along with outstanding film processability and productivity, suitable for producing a biaxially stretched film having high shrinking resistance, printability, and transparency, and a biaxially stretched film including the same.

### [Technical Solution]

According to one embodiment of the present disclosure, there is provided a polyethylene composition comprising at least one ethylene-alpha olefin copolymer, wherein, upon cross fractionation chromatography (CFC) analysis of the polyethylene composition:
a high crystalline fraction eluted at a temperature of 90 °C or more accounts for 50 wt% or more to 80 wt% or less based on the total eluted fraction;
the high crystalline fraction has a weight average molecular weight (Mw) of 140000 g/mol or more to 180000 g/mol or less;
a medium crystalline fraction eluted at a temperature of 70 °C or more and less than 90 °C accounts for 10 wt% or more to 45 wt% or less based on the total eluted fraction; and
the medium crystalline fraction has a weight average molecular weight (Mw) of 50000 g/mol or more to 80000 g/mol or less.

In another embodiment of the present disclosure, there is provided a biaxially stretched film including the polyethylene composition of the above embodiment.

The terminology used herein is for the purpose of describing particular embodiments only and is not intended to be limiting of the invention.

The singular forms are intended to include the plural forms as well, unless the context clearly indicates otherwise.

In this disclosure, the terminology "include," "comprise," or "have" is used to describe stated features, numbers, steps, components, or combination thereof, and do not preclude the addition of one or more other features, numbers, steps, components, or combinations thereof.

The terminology "about" or "substantially" is intended to have meanings close to numerical values or ranges specified with an allowable error and intended to prevent accurate or absolute numerical values disclosed for understanding of the present invention from being illegally or unfairly used by any unconscionable third party.

Further, in the present disclosure, the (co)polymer is meant to include both a homo-polymer and a co-polymer.

Unless otherwise defined herein, "copolymerization" may mean block copolymerization, random copolymerization, graft copolymerization or alternating copolymerization, and "copolymer" means block copolymer, random copolymer, graft copolymer or alternating copolymer.

As the present invention can be variously modified and have various forms, specific embodiments thereof are shown by way of examples and will be described in detail. However, it is not intended to limit the present invention to the particular form disclosed and it should be understood that the present invention includes all modifications, equivalents, and replacements within the idea and technical scope of the present invention.

Hereinafter, the present disclosure will be described in more detail.

### Polyethylene Composition

According to an aspect of the present disclosure, there is provided a polyethylene composition including at least one ethylene-alpha olefin copolymer, wherein, upon cross fractionation chromatography (CFC) analysis of the polyethylene composition: a high crystalline fraction eluted at a temperature of 90 °C or more accounts for 50 wt% or more to 80 wt% or less based on the total eluted fraction; the high crystalline fraction has a weight average molecular weight (Mw) of 140000 g/mol or more to 180000 g/mol or less; a medium crystalline fraction eluted at a temperature of 70 °C or more and less than 90 °C accounts for 10 wt% or more to 45 wt% or less based on the total eluted fraction; and the medium crystalline fraction has a weight average molecular weight (Mw) of 50000 g/mol or more to 80000 g/mol or less.

In present disclosure, "part by weight" as used herein refers to a relative concept of a ratio of the weight of the remaining material based on the weight of a specific material. For example, in a mixture containing 50 g of material A, 20 g of material B, and 30 g of material C, the amounts of material B and C based on 100 parts by weight of material A are 40 parts by weight and 60 parts by weight, respectively.

Meanwhile, "wt% (% by weight)" refers to an absolute concept of expressing the weight of a specific material in percentage based on the total weight. In the above-described mixture, the contents of material A, B and C based on 100% of the total weight of the mixture are 50 wt %, 20 wt % and 30 wt %, respectively.

In the polyethylene composition of the present disclosure, the first ethylene-alpha olefin copolymer, which has excellent mechanical properties, is blended with the second ethylene-alpha olefin copolymer, which has excellent flowability to impart stretchability, by applying specific metallocene catalysts, which will be described later, respectively, thereby adjusting the balance between mechanical properties and elongation. Accordingly, it has characteristics suitable for manufacturing a biaxially stretched film having high shrinkage resistance, printability, and transparency while maintaining mechanical properties, productivity, and stretching stability equal to or superior to those of the conventional ones.

Preferably, the polyethylene composition may include two or more ethylene-alpha olefin copolymers. More preferably, the polyethylene composition may include two types of ethylene-alpha olefin copolymers.

In addition, upon cross fractionation chromatography (CFC) analysis of the polyethylene composition, the high crystalline fraction (T≥90°C) eluted at a temperature of 90 °C or more accounts for 50 wt% or more and 80 wt% or less based on the total eluted fraction, with its weight average molecular weight (Mw) being 140000 g/mol or more and 180000 g/mol or less; the medium crystalline fraction (T≥70°C,<90°C) eluted at a temperature of 70 °C or more and less than 90 °C accounts for 10 wt% or more and 45 wt% or less based on the total eluted fraction, with its weight average molecular weight (Mw) being 50000 g/mol or more and 80000 g/mol or less.

Preferably, the weight percentage of the high crystalline fraction (T≥90°C) may be 51 wt% or more, or 51.5 wt% or more, or 52 wt% or more, or 52.5 wt% or more, or 53 wt% or more, or 53.5 wt% or more, 53.8 wt% or more, or 54 wt% or more, or 54.2 wt% or more, or 54.5 wt% or more, or 54.6 wt% or more, while being 78 wt% or less, or 75 wt% or less, or 72 wt% or less, or 70 wt% or less, or 67.5 wt% or less, or 65 wt% or less, or 64.8 wt% or less, or 64.5 wt% or less, or 64 wt% or less, or 63.5 wt% or less, or 63 wt% or less. More preferably, the polyethylene composition may have the high crystalline fraction (T≥90°C) in an amount of 54.6 wt% or more and 63 wt% or less.

Also, the weight average molecular weight (Mw, T≥90°C) of the high crystalline fraction (T≥90°C) of the composition, from the perspective of improving the rate of stress relaxation of the polyethylene composition thereby allowing the film to stabilize quickly during drawing and reduce shrinkage, may be 180000 g/mol or less, or 178000 g/mol or less, or 175000 g/mol or less, or 173000 g/mol or less, or 170000 g/mol or less, or 168000 g/mol or less, or 165000 g/mol or less, or 163000 g/mol or less, or 160000 g/mol or less, or 158000 g/mol or less, or 155000 g/mol or less, or 153000 g/mol or less, or 151000 g/mol or less. Also, the weight average molecular weight of the main chain of the high crystalline fraction (Mw_{main, T≥90°C}) is, for maintaining excellent mechanical properties of the film, preferably 140000 g/mol or more, or 142000 g/mol or more, or 145000 g/mol or more, or 146000 g/mol or more, or 147000 g/mol or more. More preferably, the polyethylene composition may have the high crystalline fraction (T≥90°C) with a weight average molecular weight (Mw, T≥90°C) of 147000 g/mol or more and 151000 g/mol or less.

In the present disclosure, cross fractionation chromatography (CFC) analysis can be specifically performed by the following method. For example, such cross fractionation chromatography (CFC) analysis is as described in Test Example 2 below.

### Cross Fractionation Chromatography (CFC) Measurement Conditions (Including TREF and GPC-IR Analysis)

- Instrumentation: Polymer Char CFC (Detector: Integrated Detector IR5 MCT)
- Sample Preparation and Loading: Place 32 mg of the polyethylene composition in a 10 mL vial, load it into an autosampler, add 8 mL of 1,2,4-trichlorobenzene (TCB), dissolve by heating at 160 °C for 90 minutes, then extract the sample following a nitrogen purge and load it into the temperature rising elution fractionation (TREF) column.
- Crystallization: Adjust the loaded sample in the TREF column to 100 °C, then cool from 100 °C to 35 °C at a rate of 0.5 °C/min.
- Temperature Rising Elution Fractionation (TREF) Analysis: After crystallization, raise the temperature from 35 °C to 125 °C in 3 °C increments, maintaining each temperature for 25 minutes to analyze the eluted fractions. Specifically, extraction and analysis are performed for 25 minutes at 35 °C, then with successive 3 °C increments, and finally at 125 °C for 25 minutes.
- GPC-IR Analysis: The fractions eluted at each temperature during the TREF analysis are transferred to the GPC (PL-GPC220) column to measure the molecular weights of the eluted molecules. The connected PerkinElmer Spectrum 100 FT-IR is used to measure the content of short chain branches (scb) in the eluted molecules.
- Determination of the main chain average molecular weight (Mw_{main, T≥90 °C}): Among fractions eluted at a temperature of 90 °C or more as confirmed by CFC analysis, the weight average molecular weight of the main chain (excluding the short chain branch) (Mw_{main, T≥90°C}, g/mol) was determined according to Equation 1. [Equation 1] ${Mw}_{main , T \geq 90 ° C} \left(g/mol\right) = \frac{{\sum }_{T = 90 ° C} {\sum }_{i} \left({M}_{T , i}-{M}_{scb}∗{n}_{T , i}^{scb}\right) ∗ {C}_{T , i}}{{\sum }_{T = 90 ° C} {\sum }_{i} {C}_{T , i}} .$ In Equation 1,
   M_{T,i} and C_{T,i} are the weight average molecular weight (g/mol) and concentration of each fraction eluted at a given temperature as determined by CFC analysis above,
   n^{scb}_{T,i} is the number of side chain branches (scb) of each fraction eluted at a given temperature as determined by CFC analysis above, and
   M_{scb} is the weight average molecular weight (g/mol) of the side chain branches (scb) as determined by CFC analysis.

In particular, the polyethylene composition may have a main chain weight average molecular weight (Mw_{main, T≥90°C}) of the high crystalline fraction, as measured by cross fractionation chromatography (CFC) analysis, of 130000 g/mol or more and 175000 g/mol or less. Preferably, to enhance the rate of stress relaxation of the polyethylene composition and reduce shrinkage rate by rapidly stabilizing the film during drawing, the main chain weight average molecular weight (Mw_{main, T≥90°C}) may be 160000 g/mol or less, or 158000 g/mol or less, or 155000 g/mol or less, or 153000 g/mol or less, or 150000 g/mol or less, or 148000 g/mol or less, or 145000 g/mol or less, or 143000 g/mol or less, or 142000 g/mol or less. However, to maintain excellent mechanical properties of the film, the main chain weight average molecular weight (Mw_{main, T≥90°C}) may be 60000 g/mol or more, or 70000 g/mol or more, or 80000 g/mol or more, or 90000 g/mol or more, or 100000 g/mol or more, or 105000 g/mol or more, or 110000 g/mol or more, or 115000 g/mol or more, or 120000 g/mol or more, or 125000 g/mol or more, or 130000 g/mol or more, or 135000 g/mol or more, or 139000 g/mol or more. More preferably, the polyethylene composition may have an Mwₘₐᵢₙ, T≥90°C of 139000 g/mol or more and 142000 g/mol or less.

Meanwhile, upon the cross-fractionation chromatography (CFC) analysis of the polyethylene composition, the medium crystalline fraction (T≥70°C,<90°C) eluted at a temperature of 70 °C or more and less than 90 °C constitutes 10 wt% or more and 45 wt% or less based on the total eluted fractions. The weight average molecular weight (Mw) of the medium crystalline fraction (T≥70°C,<90°C) is 50000 g/mol or more and 80000 g/mol or less.

Preferably, the content of the medium crystalline fraction (T≥70°C,<90°C) based on the total eluted fractions may be 10 wt% or more, or 10.2 wt% or more, or 10.5 wt% or more, or 10.6 wt% or more, or 10.7 wt% or more, or 10.8 wt% or more, or 11 wt% or more, or 11.2 wt% or more, or 11.3 wt% or more while being 45 wt% or less, or 42 wt% or less, or 40 wt% or less, or 38 wt% or less, or 35 wt% or less, or 30 wt% or less, or 28 wt% or less, or 25 wt% or less, or 20 wt% or less, or 18 wt% or less, or 17.5 wt% or less. More preferably, the polyethylene composition may have the medium crystalline fraction (T≥70°C,<90°C) in an amount of 11.3 wt% or more and 17.5 wt% or less.

Also, for the medium crystalline fraction (T≥70°C,<90°C), from the perspective of improving the rate of stress relaxation of the polyethylene composition (thus allowing the film to stabilize quickly during drawing and reducing shrinkage), the weight average molecular weight of the medium crystalline fraction (Mw, _{T≥70°C,<90°C}) may be 80000 g/mol or less, or 78000 g/mol or less, or 75000 g/mol or less, or 73000 g/mol or less, or 70000 g/mol or less, or 68000 g/mol or less, or 67000 g/mol or less, or 66000 g/mol or less, or 65000 g/mol or less, or 64,500 g/mol or less, or 64000 g/mol or less, or 63,500 g/mol or less, or 63000 g/mol or less. In addition, the main chain weight average molecular weight (Mw_{main, T≥90°C}) of the high crystalline fraction, for the purpose of maintaining excellent mechanical properties of the film, may be 50000 g/mol or more, or 52000 g/mol or more, or 55000 g/mol or more, or 58000 g/mol or more, or 60000 g/mol or more. More preferably, the polyethylene composition may have the weight average molecular weight (Mw, _{T≥70°C, <90°C}) of the medium crystalline fraction in the range of 60000 g/mol or more and 63000 g/mol or less.

Further, upon the CFC analysis of the polyethylene composition, the low crystalline fraction (T≥35°C,<70°C) eluted at a temperature of 35 °C or more and below 70 °C may be in amount of 13 wt% or more, or 13.5 wt% or more, or 14 wt% or more, or 14.5 wt% or more, or 15 wt% or more, or 15.2 wt% or more, based on the total eluted fraction. Also, the low crystalline fraction (T≥35°C,<70°C) may be in amount of 26.5 wt% or less, or 26.2 wt% or less, or 26 wt% or less, or 25.8 wt% or less, or 25.5 wt% or less. Here, the weight average molecular weight (Mw) of the low crystalline fraction (T≥35°C,<70°C) may be 41000 g/mol or more, or 41,500 g/mol or more, or 42000 g/mol or more, or 42,500 g/mol or more, or 43000 g/mol or more, or 43,500 g/mol or more, or 44000 g/mol or more, while being 50000 g/mol or less, or 49,800 g/mol or less, or 49,500 g/mol or less, or 49,200 g/mol or less, or 49000 g/mol or less. More preferably, the polyethylene composition may have the low crystalline fraction (T≥35°C,<70°C) in an amount of 15.2 wt% or more and 25.5 wt% or less, and a weight average molecular weight (Mw) of 44000 g/mol or more and 49000 g/mol or less.

Also, upon the CFC analysis of the polyethylene composition, the soluble fraction (SF) eluted at a temperature of less than 35 °C may be in amount of 1.5 wt% or more, or 1.6 wt% or more, or 1.7 wt% or more, or 1.8 wt% or more, or 1.9 wt% or more, or 2 wt% or more, based on the total eluted fraction. The soluble fraction (SF) may be in amount of 4.4 wt% or less, or 4.35 wt% or less, or 4.3 wt% or less, or 4.25 wt% or less, or 4.2 wt% or less. More preferably, the polyethylene composition may have the soluble fraction (SF, T<35°C) in an amount of 2 wt% or more and 4.2 wt% or less based on the total eluted fraction.

In the present disclosure, the contents of the high crystalline fraction (T≥90°C) eluted at a temperature of 90 °C or more, the medium crystalline fraction (T≥70°C,<90°C) eluted at a temperature of 70 °C or more to less than 90 °C, the low crystalline fraction (T≥35°C,<70°C) eluted at a temperature of 35 °C more to less than 70 °C, and the soluble fraction (SF) eluted at a temperature of less than 35 °C, all meet the above numerical ranges based on their respective amounts, where the sum of the fractions does not exceed 100%.

Furthermore, upon the CFC analysis of the polyethylene composition, in a high molecular weight region of cross fractionation chromatography, for example in the range where the weight average molecular weight (Mw) is 200000 g/mol or more and 500000 g/mol or less, that is, in the Mw range of about 10^{5.3} to 10^{5.7} (Log MW from 5.3 to 5.7), the number of branches (short chain branch, scb) of the molecules eluted in that range (the content of 2 to 7 short chain branches per 1000 carbon atoms, unit: number/1000C) may be 4 or more per 1000 carbon atoms (4 or more per 1000C, 4 /1000C or more), or from 4 or more to 14 or less per 1000 carbon atoms. For example, the short chain branch (scb) content of the molecules eluted in the aforementioned high molecular weight range may be 4.1 per 1000C or more, or 4.12 per 1000C or more, or 4.15 per 1000C or more, or 4.18 per 1000C or more, or 4.2 per 1000C or more. Also, the short chain branch (scb) content of the molecules eluted in the aforementioned high molecular weight range may be 13.5 per 1000C or less, or 12 per 1000C or less, or 10 per 1000C or less, or 9.5 per 1000C or less, or 9 per 1000C or less, or 8.8 per 1000C or less, or 8.5 per 1000C or less, 8 per 1000C or less, or 7.8 per 1000C or less, or 7.5 per 1000C or less, or 7.2 per 1000C or less. More preferably, the polyethylene composition may have the short chain branch (scb) content of the molecules eluted in the aforementioned weight average molecular weight (Mw) range of 200000 g/mol or more and 500000 g/mol or less being from 4.8 per 1000C or more to 7.2 per 1000C or less.

In one embodiment of the present disclosure, the polyethylene composition may have a density of 0.925 g/cm³ or more and 0.950 g/cm³ or less. Preferably, the density is 0.927 g/cm³ or more, 0.929 g/cm³ or more, 0.931 g/cm³ or more, 0.934 g/cm³ or more, 0.935 g/cm³ or more, or 0.936 g/cm³ or more, while being 0.949 g/cm³ or less, 0.948 g/cm³ or less, 0.947 g/cm³ or less, 0.946 g/cm³ or less, 0.945 g/cm³ or less, 0.943 g/cm³ or less, or 0.940 g/cm³ or less. More preferably, the density of the polyethylene composition is 0.936 g/cm³ or more and 0.940 g/cm³ or less.

In the present disclosure, the density (g/cm³) is measured using a density gradient tube in accordance with ASTM D 1505 standard. An example of a method for measuring the density (g/cm³) is disclosed in Test Examples 1 and 2.

In addition, the polyethylene composition may have a melt index (MI_{2.16}, measured at 190 °C under a 2.16 kg load) of 0.1 g/10 min to 2.0 g/10 min. Preferably, the melt index (MI_{2.16}, measured at a temperature of 190 °C under a load of 2.16 kg) is 0.2 g/10 min or more, 0.3 g/10 min or more, 0.4 g/10 min or more, 0.45 g/10 min or more, 0.48 g/10 min or more, 0.5 g/10 min or more, or 0.53 g/10 min or more while being 0.9 g/10 min or less, 0.8 g/10 min or less, 0.75 g/10 min or less, or 0.7 g/10 min or less, 0.68 g/10 min or less, 0.65 g/10 min or less, 0.62 g/10 min or less, or 0.61 g/10 min or less. More preferably, the polyethylene composition has a melt index (MI_{2.16}, measured at a temperature of 190 °C under a load of 2.16 kg) of 0.53 g/10 min or more and 0.61 g/10 min or less.

In the present disclosure, the melt index (MI_{2.16}) is measured in accordance with ASTM D 1238 (Condition E, 190 °C, 2.16 kg) standard at a temperature of 190 °C under a load of 2.16 kg. For example, one method for measuring the melt index (MI_{2.16}) is disclosed in Test Examples 1 and 2.

Furthermore, the polyethylene composition may have a melt flow rate ratio (MFRR, defined as MI_{21.6}/MI_{2.16}, where MI_{21.6} is measured at 190 °C under a 21.6 kg load and MI_{2.16} is measured at 190 °C under a 2.16 kg load) of 70.0 or more. Preferably, the melt flow rate ratio (MFRR, MI_{21.6}/MI_{2.16}) is 72 or more, or 74 or more, or 75 or more, or 78 or more, or 79 or more, or 80 or more, or 80.9 or more while being 110 or less, or 105 or less, or 100 or less, or 98 or less, or 95 or less, or 92 or less, or 90 or less, or 88.7 or less. More preferably, the polyethylene composition has a melt flow rate ratio (MFRR, MI_{21.6}/MI_{2.16}) of 80.9 or more and 88.7 or less.

Additionally, the polyethylene composition may have a number average molecular weight (Mn) of 15000 g/mol or more, 17000 g/mol or more, or 19000 g/mol or more, and up to 500000 g/mol or less, 300000 g/mol or less, 100000 g/mol or less, 50000 g/mol or less, or 31000 g/mol or less, and a weight average molecular weight (Mw) of 100000 g/mol or more, or 106000 g/mol or more, and 1000000 g/mol or less, 500000 g/mol or less, 300000 g/mol or less, or 158000 g/mol or less.

The molecular weight distribution (Mw/Mn) of the polyethylene composition may be 5.0 or more to 11.5 or less. More preferably, the molecular weight distribution (Mw/Mn) of the polyethylene composition may be 11.2 or less, or 11.0 or less, or 10.8 or less, or 10.6 or less, or 10.5 or less, or 10.2 or less, or 10.0 or less, or 9.5 or less, or 9.3 or less, or 9.0 or less, or 8.5 or less, or 8.3 or less, or 8 or less, or 7.8 or less, or 7.5 or less, or 7.3 or less, or 7.0 or less, or 6.8 or less, or 6.7 or less. Also, the molecular weight distribution (Mw/Mn) may be 5.2 or more, or 5.3 or more, 5.4 or more, 5.5 or more, 5.6 or more, 5.7 or more, or 5.8 or more. Particularly, when the molecular weight distribution (Mw/Mn) of the polyethylene composition is 5.0 or more, the bimodal molecular structural characteristics are enhanced, and the degree of dualization of the GPC peak increases while the processing viscosity may decrease. However, if the molecular weight distribution (Mw/Mn) of the polyethylene composition exceeds 11.5, it may adversely affect the physical properties or appearance of the film. More preferably, the molecular weight distribution (Mw/Mn) of the polyethylene composition may be 5.8 or more to 6.7 or less.

In the present disclosure, the weight average molecular weight (Mw) and the number average molecular weight (Mn) are conversion values with respect to standard polystyrene measured using gel permeation chromatography (GPC, manufactured by Waters). However, the weight average molecular weight is not limited to this method and may be measured by other methods known in the art. For example, methods for measuring such weight average molecular weight (Mw) and number average molecular weight (Mn) are as described in Test Examples 1 and 2 below.

Also, the polyethylene composition may have a melting point (Tm) of 127 °C or more to 130 °C or less, or from 127.2 °C or more to 129.8 °C or less, or from 127.3 °C or more to 129.5 °C or less, or from 127.4 °C or more and 129 °C or less, or from 127.5 °C or more to 128 °C or less; a crystallization temperature (Tc) of 111 °C or more and 115 °C or less, or from 111.5 °C or more to 114.5 °C or less, or from 111.7 °C or more to 114 °C or less, or from 112 °C or more to 112.5 °C or less; and crystallinity (Xc) of 55% or more to 70% or less, or from 58% or more to 68% or less, or from 60% or more to 67.5% or less. More preferably, the polyethylene composition has a melting point (Tm) of 127.5 °C or more to 128 °C or less, a crystallization temperature (Tc) of 111.5 °C or more to 112.5 °C or less, and a crystallinity (Xc) of 60% or more to 67.5%.

In the present disclosure, the melting point (Tm), crystallization temperature (Tc), and crystallinity (Xc) may be measured using a differential scanning calorimeter (DSC, e.g., DSC Q20 manufactured by TA Instruments). For example, one method for measuring Tm, Tc, and Xc is described in Test Example 2.

In one embodiment of the present disclosure, the polyethylene composition comprises, as its components,
(a) first ethylene-alpha olefin copolymers that have a density of 0.930 g/cm³ to 0.960 g/cm³, a melt index (MI_{2.16}, measured at a temperature of 190 °C under a load of 2.16 kg) of 0.2 g/10 min to 2.0 g/10 min, and a molecular weight distribution (Mw/Mn) of 5 or more to 8.7 or less; and
(b) second ethylene-alpha olefin copolymers that have a density of 0.870 g/cm³ to 0.920 g/cm³, a melt index (MI_{2.16}, measured at a temperature of 190 °C under a load of 2.16 kg) of 3.0 g/10 min to 10.0 g/10 min, and a molecular weight distribution (Mw/Mn) of 2.0 or more to 4.0 or less;
wherein (a) the first ethylene-alpha olefin copolymer are present in an amount of 60 wt% or more to 90 wt% or less, and (b) the second ethylene-alpha olefin copolymer are present in an amount of 10 wt% or more to 40 wt% or less.

Preferably, (a) the first ethylene-alpha olefin copolymer are present at 65 wt% or more, 67 wt% or more, or 70 wt% or more, and at 85 wt% or less, 83 wt% or less, or 80 wt% or less.

Additionally, (b) the second ethylene-alpha olefin copolymer are preferably present in an amount of 15 wt% or more, 17 wt% or more, or 20 wt% or more, and in an amount of 35 wt% or less, 33 wt% or less, or 30 wt% or less.

More preferably, in the polyethylene composition, (a) the first ethylene-alpha olefin copolymer may be an ethylene/1-hexene copolymer, and (b) the second ethylene-alpha olefin copolymer may be an ethylene/1-octene copolymer.

### (a) First ethylene-alpha olefin copolymer

In the polyethylene composition according to an embodiment of the present disclosure, (a) the first ethylene-alpha olefin copolymer has excellent mechanical properties along with an appropriate balance between crystallinity and processability thereby imparting features suitable for the production of a biaxially stretched film with outstanding drawability and high mechanical properties.

Specifically, (a) the first ethylene-alpha olefin copolymer has a density of 0.930 g/cm³ to 0.960 g/cm³, a melt index (MI_{2.16}, at 190 °C under a load of 2.16 kg) of 0.2 g/10 min to 2.0 g/10 min, and a molecular weight distribution (Mw/Mn) of 5 or more to 8.7 or less.

Preferably, (a) the first ethylene-alpha olefin copolymer may have a density of at least 0.933 g/cm³, or at least 0.935 g/cm³, or at least 0.938 g/cm³, or at least 0.941 g/cm³, while at most 0.955 g/cm³, or at most 0.950 g/cm³, or at most 0.948 g/cm³.

The melt index (MI_{2.16}, at 190 °C under a load of 2.16 kg) of (a) the first ethylene-alpha olefin copolymer may be 0.2 g/10 min or more, and 1.5 g/10 min or less, or at most 1.0 g/10 min, or at most 0.6 g/10 min.

The molecular weight distribution (Mw/Mn) of (a) the first ethylene-alpha olefin copolymer is 5 or more to 8.7 or less.

In addition, (a) the first ethylene-alpha olefin copolymer may have a number average molecular weight (Mn) of 12000 g/mol or more to 50000 g/mol or less, and a weight average molecular weight (Mw) of 100000 g/mol or more to 250000 g/mol or less.

Preferably, the number average molecular weight (Mn) of (a) the first ethylene-alpha olefin copolymer may be at least 13000 g/mol, or at least 13500 g/mol, or at least 14000 g/mol, or at least 14500 g/mol, or 15000 g/mol, and at most 40000 g/mol, or at most 35000 g/mol, or at most 30000 g/mol, or at most 28000 g/mol, or at most 25000 g/mol, or at most 23000 g/mol, or at most 20000 g/mol, or at most 18000 g/mol, or at most 17000 g/mol, or at most 168000 g/mol.

The weight average molecular weight (Mw) of (a) the first ethylene-alpha olefin copolymer may be at least 105000 g/mol, or at least 110000 g/mol, or at least 114000 g/mol, or at least 118000 g/mol, or at least 120000 g/mol, or at least 123000 g/mol, or at least 125000 g/mol, or at least 128000 g/mol, or at least 130000 g/mol, or at least 132000 g/mol, or at least 135000 g/mol, while being 230000 g/mol or less, or 210000 g/mol or less, or 200000 g/mol or less, or 185000 g/mol or less, or 180000 g/mol or less, or 175000 g/mol or less, or 168000 g/mol or less, or 165000 g/mol or less, or 160000 g/mol or less, or 158000 g/mol or less, or 155000 g/mol or less, or 153000 g/mol or less, or 150000 g/mol or less, or 148000 g/mol or less, or 145000 g/mol or less, or 143000 g/mol or less, or 140000 g/mol or less.

The molecular weight distribution (Mw/Mn) of (a) the first ethylene-alpha olefin copolymer may be from 5 or more to 8.7 or less. More preferably, the molecular weight distribution (Mw/Mn) of (a) the first ethylene-alpha olefin copolymer may be 5.2 or more, 5.5 or more, 5.8 or more, 6.0 or more, 6.5 or more, 6.8 or more, 7.0 or more, 7.2 or more, 7.5 or more, 7.8 or more, 8.0 or more, 8.2 or more, or 8.4 or more while being 8.69 or less, 8.68 or less, 8.65 or less, or 8.63 or less.

In particular, (a) the first ethylene-alpha olefin copolymer may have at least one of the above-described physical properties, and may have all of the above-described physical properties to exhibit excellent mechanical strength.

In the present disclosure, (a) the first ethylene-alpha olefin copolymer may comprise at least one alpha-olefin selected from the group consisting of 1-butene, 1-pentene, 1-hexene, 4-methyl-1-pentene, 1-octene, 1-decene, 1-dodecene, 1-tetradecene, 1-hexadecene, 1-octadecene, 1-eicosene, and a mixture thereof together with ethylene.

Preferably, (a) the first ethylene-alpha olefin copolymer may be an ethylene/1-hexene copolymer.

When (a) the first ethylene-alpha olefin copolymer is the above-described copolymer, the above-described physical properties may be more easily achieved. However, the type of (a) the first ethylene-alpha olefin copolymer is not limited thereto, and various types known in the art may be used as long as they can exhibit the above-mentioned physical properties.

Meanwhile, (a) the first ethylene-alpha olefin copolymer may be prepared in the presence of a metallocene catalyst.

Specifically, (a) the first ethylene-alpha olefin copolymer may be prepared by copolymerizing ethylene and a comonomer while introducing hydrogen gas in the presence of a catalyst composition including a first metallocene compound represented by the following Chemical Formula 1 and a second metallocene compound represented by the following Chemical Formula 2 in a molar ratio of 1:1 to 1:8:

[Chemical Formula 1] (Cp¹R^{a})ₘ(Cp²R^{b})M²Z²₃₋ₘ

in Chemical Formula 1,
M² is a Group 4 transition metal;
Cp¹ and Cp² are each independently cyclopentadienyl unsubstituted or substituted with a C₁₋₂₀ hydrocarbon;
R^{a} and R^{b} are the same as or different from each other, and are each independently hydrogen, C₁₋₂₀ alkyl, C₁₋₂₀ alkoxy, C₂₋₂₀ alkoxyalkyl, C₆₋₂₀ aryl, C₆₋₂₀ aryloxy, C₂₋₂₀ alkenyl, C₇₋₄₀ alkylaryl, C₇₋₄₀ arylalkyl, C₈₋₄₀ arylalkenyl, C₂₋₂₀ alkynyl, or a substituted or unsubstituted C₂₋₂₀ heteroaryl containing at least one heteroatom selected from the group consisting of N, O and S, provided that at least one of R^{a} and R^{b} is not hydrogen;
each Z² is independently halogen, C₁₋₂₀ alkyl, C₂₋₂₀ alkenyl, C₇₋₄₀ alkylaryl, C₇₋₄₀ arylalkyl, C₆₋₂₀ aryl, substituted or unsubstituted C₁₋₂₀ alkylidene, a substituted or unsubstituted amino group, C₂₋₂₀ alkylalkoxy, or C₇₋₄₀ arylalkoxy; and
m is 1 or 0; 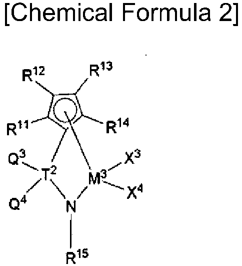
in Chemical Formula 2,
M³ is a Group 4 transition metal,
T² is carbon, silicon or germanium,
X³ and X⁴ are the same as or different from each other, and are each independently halogen or C₁₋₂₀ alkyl,
R¹¹ to R¹⁴ are the same as or different from each other, and are each independently hydrogen, C₁₋₂₀ alkyl, C₂₋₂₀ alkenyl, C₆₋₂₀ aryl, C₇₋₂₀ alkylaryl, C₇₋₂₀ arylalkyl, or two or more of R¹¹ to R¹⁴ adjacent to each other are connected to each other to form a substituted or unsubstituted aliphatic ring, a substituted or unsubstituted aromatic ring, or a substituted or unsubstituted heteroaromatic ring containing at least one selected from the group consisting of N, O and S,
Q³ and Q⁴ are the same as or different from each other, and are each independently C₁₋₂₀ alkyl, C₂₋₂₀ alkenyl, C₆₋₃₀ aryl, or C₂₋₂₀ alkoxyalkyl, and
R¹⁵ is C₁₋₂₀ alkyl, C₂₋₂₀ alkenyl, or C₆₋₃₀ aryl.

Unless otherwise specified herein, following terms may be defined as follows.

The halogen may be fluorine (F), chlorine (Cl), bromine (Br) or iodine (I).

The C₁₋₂₀ alkyl group may be a linear, branched or cyclic alkyl group. Specifically, the C₁₋₂₀ alkyl group may be a C₁₋₁₅ linear alkyl group; a C₁₋₁₀ linear alkyl group; a C₁₋₅ linear alkyl group; a C₃₋₂₀ branched or cyclic alkyl group; a C₃₋₁₅ branched or cyclic alkyl group; or a C₃₋₁₀ branched or cyclic alkyl group. More specifically, the C₁₋₂₀ alkyl group may be a methyl group, an ethyl group, an n-propyl group, an isopropyl group, an n-butyl group, an iso-butyl group, a tert-butyl group, an n-pentyl group, an iso-pentyl group, a neo-pentyl group, a cyclohexyl group or the like.

The C₂₋₂₀ alkenyl group may be a linear, branched, or cyclic alkenyl group. Specifically, the C₂₋₂₀ alkenyl group may be a C₂₋₂₀ linear alkenyl group, a C₂₋₁₀ linear alkenyl group, a C₂₋₅ linear alkenyl group, a C₃₋₂₀ branched alkenyl group, a C₃₋₁₅ branched alkenyl group, a C₃₋₁₀ branched alkenyl group, a C₅₋₂₀ cyclic alkenyl group, or a C₅₋₁₀ cyclic alkenyl group. More specifically, the C₂₋₂₀ alkenyl group may be an ethenyl group, a propenyl group, a butenyl group, a pentenyl group, a cyclohexenyl group, or the like.

The C₆₋₂₀ aryl may be a monocyclic, bicyclic or tricyclic aromatic hydrocarbon, and includes monocyclic or condensed aryl. Specifically, the C₆₋₂₀ aryl may be phenyl, biphenyl, naphthyl, anthracenyl, phenanthrenyl, fluorenyl, or the like.

The C₇₋₄₀ alkylaryl may be a substituent in which at least one hydrogen of the aryl is substituted with alkyl. Specifically, the C₇₋₄₀ alkylaryl may be methylphenyl, ethylphenyl, n-propylphenyl, iso-propylphenyl, n-butylphenyl, iso-butylphenyl, tert-butylphenyl, cyclohexylphenyl, or the like.

The C₇₋₄₀ arylalkyl may include a substituent in which at least one hydrogen of the alkyl is substituted with aryl. Specifically, the C₇₋₄₀ arylalkyl may be benzyl, phenylpropyl, phenylhexyl, or the like.

The C₆₋₂₀ aryloxy may be phenoxy, biphenoxy, naphthoxy, or the like, but the present disclosure is not limited thereto.

The C₁₋₂₀ alkoxy group may be a methoxy group, an ethoxy group, a phenyloxy group, a cyclohexyloxy group, or the like, but the present disclosure is not limited thereto.

The C₂₋₂₀ alkoxyalkyl group is a functional group in which at least one hydrogen of the alkyl group is substituted with an alkoxy group, and specifically, it may be an alkoxyalkyl group such as a methoxymethyl group, a methoxyethyl group, an ethoxymethyl group, an iso-propoxymethyl group, an iso-propoxyethyl group, an iso-propoxyhexyl group, a tert-butoxymethyl group, a tert-butoxyethyl group, a tert-butoxyhexyl group, or the like, but the present disclosure is not limited thereto.

The C₁₋₂₀ alkylsilyl group or the C₁₋₂₀ alkoxysilyl group is a functional group in which 1 to 3 hydrogens of -SiH₃ are substituted with 1 to 3 alkyl groups or alkoxy groups described above, and specifically, it may be an alkylsilyl group such as a methylsilyl group, a dimethylsilyl group, a trimethylsilyl group, a dimethylethylsilyl group, a diethylmethylsilyl group or a dimethylpropylsilyl group; an alkoxysilyl group such as a methoxysilyl group, a dimethoxysilyl group, a trimethoxysilyl group or a dimethoxyethoxysilyl group; or an alkoxyalkylsilyl group such as a methoxydimethylsilyl group, a diethoxymethylsilyl group or a dimethoxypropylsilyl group, but the present disclosure is not limited thereto.

The C₁₋₂₀ silylalkyl group is a functional group in which at least one hydrogen of the alkyl group is substituted with a silyl group, and specifically, it may be -CH₂-SiH₃, a methylsilylmethyl group or a dimethylethoxysilylpropyl group, or the like, but the present disclosure is not limited thereto.

The sulfonate group has a structure of -O-SO₂-R', wherein R' may be a C₁₋₂₀ alkyl group. Specifically, the C₁₋₂₀ sulfonate group may be a methanesulfonate group, a phenylsulfonate group, or the like, but the present disclosure is not limited thereto.

The heteroaryl is a C₂₋₂₀ heteroaryl containing at least one of N, O, and S as a heterogeneous element, and includes monocyclic or condensed heteroaryl. Specifically, it may be xanthene, thioxanthen, a thiophene group, a furan group, a pyrrole group, an imidazole group, a thiazole group, an oxazole group, an oxadiazole group, a triazole group, a pyridyl group, a bipyridyl group, a pyrimidyl group, a triazine group, an acridyl group, a pyridazine group, a pyrazinyl group, a quinolinyl group, a quinazoline group, a quinoxalinyl group, a phthalazinyl group, a pyrido-pyrimidinyl group, a pyrido-pyrazinyl group, a pyrazino-pyrazinyl group, an isoquinoline group, an indole group, a carbazole group, a benzoxazole group, a benzoimidazole group, a benzothiazole group, a benzocarbazole group, a benzothiophene group, a dibenzothiophene group, a benzofuranyl group, a phenanthroline group, an isoxazolyl group, a thiadiazolyl group, a phenothiazinyl group, a dibenzofuranyl group, or the like, but the present disclosure is not limited thereto.

In addition, the Group 4 transition metal may be titanium (Ti), zirconium (Zr), hafnium (Hf), or rutherpodium (Rf), and specifically titanium (Ti), zirconium (Zr), or hafnium (Hf). More specifically, it may be zirconium (Zr) or hafnium (Hf), but is not limited thereto.

In addition, the group 13 element may be boron (B), aluminum (Al), gallium (Ga), indium (In), or thallium (Tl), and specifically, boron (B), or aluminum (Al). However, it is not limited thereto.

The above-mentioned substituents may be optionally substituted with one or more substituents selected from the group consisting of a hydroxyl group; halogen; an alkyl or alkenyl, aryl, alkoxy group; an alkyl or alkenyl, aryl, alkoxy group containing at least one heteroatom of Group 14 to 16 heteroatoms; a silyl group; an alkylsilyl or alkoxysilyl group; a phosphine group; a phosphide group; a sulfonate group; and a sulfone group within the range of exhibiting the same or similar effects as the desired effects.

In addition, "two neighboring substituents are connected with each other to form an aliphatic or aromatic ring" means that the atom(s) of two substituents and the atom(s) to which the two substituents are bonded are connected with each other to form a ring. Specifically, examples in which R₉ and R₁₀ of -NR₉R₁₀ are connected with each other to form an aliphatic ring include a piperidinyl group, and examples in which R₉ and R₁₀ of -NR₉R₁₀ are connected with each other to form an aromatic ring include a pyrrolyl group.

In the catalyst composition, the first metallocene compound represented by the Chemical Formula 1 is a non-crosslinked compound including ligands of Cp¹ and Cp², and is advantageous for mainly producing a low molecular weight copolymer having a low SCB (short chain branch) content.

Specifically, in the Chemical Formula 1, the ligands of Cp¹ and Cp² may be the same or different from each other, and each may be cyclopentadienyl and substituted with one or more, or one to three C₁₋₁₀ alkyls. As the ligands of Cp¹ and Cp² have a pair of non-covalent electrons capable of acting as a Lewis base, high polymerization activity may be achieved. Particularly, as the ligands of Cp¹ and Cp² are cyclopentadienyl with relatively little steric hindrance, they exhibit high polymerization activity and low hydrogen reactivity, and thus polyethylene having a low molecular weight can be polymerized with high activity.

In addition, the ligands of Cp¹ and Cp² can easily control properties such as chemical structure, molecular weight, molecular weight distribution, mechanical properties, and transparency of the polyethylene to be prepared by adjusting the degree of steric hindrance effect depending on the type of the substituted functional groups. Specifically, the ligands of Cp¹ and Cp² are substituted with R^{a} and R^{b}, respectively, wherein R^{a} and R^{b} are the same as or different from each other, and each may independently be hydrogen, C₁₋₂₀ alkyl, C₂₋₂₀ alkoxyalkyl, C₇₋₄₀ arylalkyl, or substituted or unsubstituted C₂₋₁₂ heteroaryl containing at least one heteroatom selected from the group consisting of N, O and S, and more specifically C₁₋₁₀ alkyl, C₂₋₁₀ alkoxyalkyl, C₇₋₂₀ arylalkyl, or substituted or unsubstituted C₄₋₁₂ heteroaryl containing at least one heteroatom selected from the group consisting of N, O and S.

Further, M²Z²₃₋ₘ presents between the ligands of Cp¹ and Cp², and M²Z²₃₋ₘ may affect storage stability of metal complex. In order to effectively ensure this effect, Z¹ may each independently be halogen or C₁₋₂₀ alkyl, and more specifically F, Cl, Br or I. In addition, M² may each independently be Ti, Zr or Hf; Zr or Hf; or Zr.

The first metallocene compound may be a compound in which each of Cp¹ and Cp² is an unsubstituted or substituted cyclopentadienyl group, and R^{a} and R^{b} are each independently hydrogen, C₁₋₁₀ alkyl, C₂₋₁₀ alkoxyalkyl, or C₇₋₂₀ arylalkyl, wherein at least one of R^{a} and R^{b} is an alkoxyalkyl group such as t-butoxyhexyl group, more specifically, a substituent of -(CH₂)ₚ-OR^{c} (wherein R^{c} is a linear or branched alkyl group having 1 to 6 carbon atoms, and p is an integer of 2 to 4). In addition, this case shows a low conversion to the comonomer compared to other Cp-based catalysts not including the above substituent in the preparation of polyethylene using a comonomer, so that a low molecular weight polyethylene in which the degree of copolymerization or comonomer distribution is controlled can be prepared. In addition, when the first metallocene compound having the above structure is supported on a carrier, the - (CH₂)ₚ-OR^{c} group among the substituents can form a covalent bond through close interaction with the silanol group on the surface of the silica used as the carrier. Therefore, stable supported polymerization is possible.

The first metallocene compound represented by the Chemical Formula 1 may be a compound represented by one of the following structural formulae, but is not limited thereto:

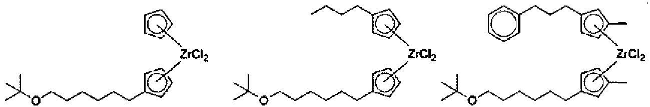

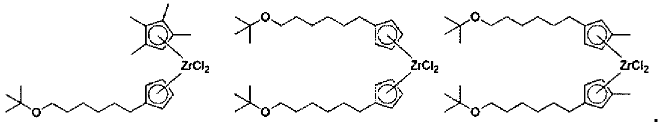

The first metallocene compound represented by the Chemical Formula 1 may be synthesized by applying known reactions, and a more detailed synthesis method may be understood with reference to Examples.

Meanwhile, in one embodiment of the present disclosure, the second metallocene compound represented by the Chemical Formula 2 includes an aromatic ring compound containing cyclopentadienyl or a derivative thereof and a nitrogen atom, and has a structure in which the aromatic ring compound and the nitrogen atom are cross-linked by T²Q³Q⁴, which is a bridge group. The second metallocene compound having such a specific structure is applied to the polymerization reaction of the ethylene/1-hexene copolymer to exhibit high activity and copolymerizability, and can provide an olefin copolymer having a high molecular weight.

In particular, the second metallocene compound represented by the Chemical Formula 2 has a well-known structure of CGC (constrained geometry catalyst), so that comonomer incorporation is excellent, and the distribution of the comonomer is controlled by the electronic and steric characteristics of the ligand. These properties control ASL (average ethylene sequence length) to increase the middle and high molecular weight regions in the molecular weight distribution, thereby increasing the entanglement of polymer chains. Accordingly, it is easy to prepare an ethylene-alpha olefin copolymer exhibiting high resistance to film tearing and puncturing during film processing, while showing excellent drawability and processability.

M³ of the metallocene compound represented by the Chemical Formula 2 may be a Group 4 transition metal, and may preferably be titanium (Ti), zirconium (Zr), or hafnium (Hf).

Preferably, T² in Chemical Formula 2 may be silicon.

Preferably, X³ and X⁴ in Chemical Formula 2 may each independently be methyl or chlorine (Cl).

Preferably, R¹¹ to R¹⁴ in Chemical Formula 2 are the same as or different from each other, and each may independently be methyl or phenyl.

Preferably, two or more of R¹¹ to R¹⁴ adjacent to each other in the Chemical Formula 2 are connected with each other to form a substituted or unsubstituted aliphatic ring, a substituted or unsubstituted aromatic ring, or a substituted or unsubstituted heteroaromatic ring containing at least one selected from the group consisting of N, O and S. For example, in Chemical Formula 2, as two or more of R¹¹ to R¹⁴ adjacent to each other are connected to form an aliphatic, aromatic, or heteroaromatic ring, an indenyl group, a fluorenyl group, a benzothiophene group, or a dibenzothiophene group in which cyclopentadiene is fused may be formed. In addition, the indenyl group, fluorenyl group, benzothiophene group, and dibenzothiophene group may be substituted with one or more substituents.

Preferably, R¹⁵ to R¹⁶ in Chemical Formula 2 may be the same as or different from each other, and may each independently be methyl, ethyl, phenyl, propyl, hexyl, or tert-butoxyhexyl.

Preferably, R¹⁷ in Chemical Formula 2 may be methyl, ethyl, n-propyl, isopropyl, n-butyl, or tert-butyl.

As the second metallocene compound capable of providing an ethylene-alpha olefin copolymer excellent in stretching stability during a biaxially stretching along with outstanding mechanical properties due to the increased middle and high molecular weight regions, the metallocene compound of the Chemical Formula 2 may be any one selected from the group consisting of the following compounds, but the present disclosure is not limited thereto:

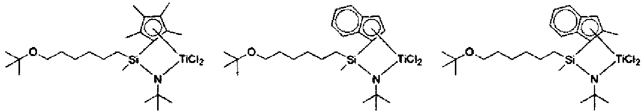

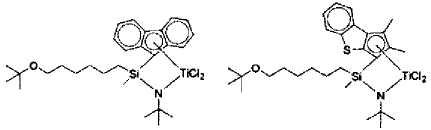

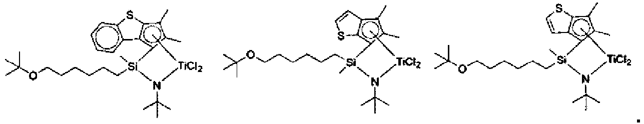

The second metallocene compound represented by the Chemical Formula 2 may be synthesized by applying known reactions. Specifically, it may be prepared by connecting a nitrogen compound and a cyclopentadiene derivative with a bridge compound to prepare a ligand compound, and then adding a metal precursor compound to perform metalation. However, the method is not limited thereto, and a more detailed synthesis method may be understood with reference to Examples.

The second metallocene compound of Chemical Formula 2 has excellent activity and can polymerize an ethylene-alpha olefin copolymer having a high molecular weight. In particular, even when used by being supported on a carrier, it exhibits high polymerization activity, so that an ethylene-alpha olefin copolymer having an ultra-high molecular weight can be prepared.

In addition, even when a polymerization reaction is performed with hydrogen to prepare an ethylene-alpha olefin copolymer having a high molecular weight along with a wide molecular weight distribution, the second metallocene compound of Chemical Formula 2 according to the present disclosure exhibits low hydrogen reactivity, so that it is possible to copolymerize an ethylene-alpha olefin copolymer having an ultra-high molecular weight with high activity. Therefore, even when used in combination with a catalyst having other characteristics, an ethylene-alpha olefin copolymer satisfying the characteristics of high molecular weight can be prepared without deterioration in activity, and thus an ethylene-alpha olefin copolymer having a wide molecular weight distribution while including a high molecular weight polyethylene resin can be easily prepared.

As described above, in the catalyst composition, the first metallocene compound represented by the Chemical Formula 1 may mainly contribute to making a low molecular weight copolymer having a low SCB content, and the second metallocene compound represented by the Chemical Formula 2 may mainly contribute to making a high molecular weight copolymer having a high SCB content. More specifically, the catalyst composition exhibits high comonomer incorporation with respect to the comonomer in the high molecular weight region of the copolymer by the second metallocene compound, and low comonomer incorporation with respect to the comonomer in the low molecular weight region of the copolymer by the first metallocene compound. As a result, an ethylene-alpha olefin copolymer exhibiting excellent heat resistance by having a bimodal molecular weight distribution with excellent mechanical properties can be prepared.

Particularly, controlling the content ratio of the first and second metallocene compounds in the catalyst composition may enable the above-described physical properties and further enhance the improvement effect. Specifically, when including the second metallocene compound in a higher content than the first metallocene compound in the catalyst composition, the middle and high molecular weight regions in the molecule are increased to increase the entanglement of polymer chains, thereby optimizing the ratio of the high molecular weight region and the low molecular weight region.

Specifically, the first and second metallocene compounds should be included in a molar ratio of 1:1 to 1:8. Preferably, the first and second metallocene compounds may be included in a molar ratio of 1:1 to 1:7, 1:1 to 1:6, or 1:1 to 1:5.5. When the first and second metallocene compounds are included within the above range, the balance between mechanical properties and elongation of the ethylene-alpha olefin copolymer thus prepared is controlled. Accordingly, it maintains mechanical properties, productivity, and stretching stability equal to or superior to those of the conventional ones, and may improve shrink resistance, printability, and transparency.

Meanwhile, the first and second metallocene compounds have the above-described structural characteristics, so they may be stably supported on a carrier.

In this case, the first and second metallocene compounds are used in a state supported on the carrier. When used as a supported catalyst, the polymer to be prepared has excellent particle shape and bulk density, and the catalyst may be suitably used in conventional slurry polymerization, bulk polymerization, and gas phase polymerization.

The carrier may be silica, alumina, magnesia, silica-alumina, or silica-magnesia, and it may usually contain oxides, carbonates, sulfates, or nitrates such as Na₂O, K₂CO₃, BaSO₄, Mg(NO₃)₂ and the like. Among the above-mentioned supports, the silica support has little catalyst released from the surface of the carrier in the polymerization process, because the transition metal compound is supported by chemical bonding with a reactive functional group such as a siloxane group present on the surface of the silica support. As a result, when the polymer is prepared by slurry polymerization or gas phase polymerization, a fouling phenomenon, sticking to the wall surface of the reactor or with each other, may be minimized.

In addition, the carrier may be surface-modified by a calcination or drying process in order to increase supporting efficiency and minimize leaching and fouling. Through the surface modification step as described above, moisture on the surface of the carrier that inhibits the reaction with the supported component may be removed, and the content of reactive functional groups capable of chemical bonding with the supported components, for example, a hydroxyl group and a siloxane group, may be increased.

Specifically, the calcination or drying process of the carrier may be performed in a range from a temperature at which moisture disappears from the surface of the carrier to a temperature at which reactive functional groups, particularly hydroxyl groups (OH groups) present on the surface, are completely eliminated. Specifically, the temperature may be 150 °C to 600 °C, or 200 °C to 500 °C. When the temperature is low, less than 150 °C, the moisture removal efficiency is low, and as a result, the moisture remaining on the carrier may react with the cocatalyst to lower the supporting efficiency. When the temperature is excessively high, higher than 600 °C, pores on the surface of the carrier may be combined with each other to reduce specific surface area, and many reactive functional groups such as hydroxyl groups or silanol groups may be lost from the surface, leaving only siloxane groups. Thus, reactive sites with cocatalyst may be reduced, which is not preferable.

When the first and second metallocene compounds are supported on a carrier and the carrier is silica, the first and second metallocene compounds may be supported in a total amount of 40 µmol or more, or 80 µmol or more, and 240 µmol or less, or 160 µmol or less based on 1 g of silica. When supported within the above range, it may exhibit an appropriate supporting activity, which may be advantageous in terms of maintaining the activity of the catalyst and economic feasibility.

In addition, the catalyst composition may further include a cocatalyst in terms of improving high activity and process stability.

In the hybrid supported metallocene catalyst of the present disclosure, the type and content of the cocatalyst additionally included are as described above with respect to (a) the first ethylene-alpha olefin copolymer, and specific details are omitted.

For example, among the compounds described above, the cocatalyst may be, more specifically, an alkylaluminoxane-based cocatalyst such as methylaluminoxane.

Further, the alkylaluminoxane-based cocatalyst stabilizes the metallocene compounds and acts as a Lewis acid, so that further enhances catalytic activity by including a metal element capable of forming a bond with a functional group introduced into a bridge group of the second metallocene compound through Lewis acid-base interaction.

In addition, the amount of the cocatalyst used may be appropriately adjusted depending on desired properties or effects of the catalyst and the resin composition. For example, when silica is used as the carrier, the cocatalyst may be supported in an amount of 8 mmol or more, or 10 mmol or more, and 25 mmol or less, or 20 mmol or less based on a weight of the carrier, for example, 1 g of silica.

In addition, the catalyst composition described above may be used by itself for polymerization, or may be used in a prepolymerized state by contacting with ethylene monomers before the use in a polymerization reaction. In this case, the preparation method according to an embodiment of the present disclosure may further include a prepolymerization step of contacting the catalyst composition with ethylene monomers before preparing the polyethylene by a polymerization reaction.

In addition, the catalyst composition may be dissolved or diluted in an aliphatic hydrocarbon solvent having 5 to 12 carbon atoms such as pentane, hexane, heptane, nonane, decane, and an isomer thereof, an aromatic hydrocarbon solvent such as toluene, and benzene, or a hydrocarbon solvent substituted with chlorine such as dichloromethane, and chlorobenzene, and then injected. The solvent used herein is preferably used after removing a small amount of water or air, which acts as a catalyst poison, by treating with a small amount of alkyl aluminum. It is also possible to further use the cocatalyst.

Meanwhile, the polymerization process may be performed by contacting ethylene and a comonomer in the presence of the above-described catalyst composition. In particular, the polymerization reaction may be performed in a bimodal type using two or more reactors or in a single polymerization reactor.

The polymerization may be performed at a temperature of 25 °C to 500 °C, preferably 25 °C to 200 °C, and more preferably 50 °C to 150 °C. In addition, the polymerization may be performed at a pressure of 1 kgf/cm² to 100 kgf/cm², preferably 1 kgf/cm² to 50 kgf/cm², and more preferably 5 kgf/cm² to 30 kgf/cm².

In addition, in the copolymerization process, the input of an alpha olefin monomer as a comonomer may be about 3.0 wt% or more to about 6.0 wt% or less based on the total input weight of ethylene. More specifically, the input of an alpha olefin monomer may be about 3.1 wt% or more, about 3.2 wt% or more, about 3.3 wt% or more, about 3.4 wt% or more, or about 3.5 wt% or more, about 3.55 wt% or more, about 3.6 wt% or more, about 3.65 wt% or more, or about 3.7 wt% or more, and about 5.9 wt% or less, about 5.8 wt% or less, 5.6 wt% or less, about 5.4 wt% or less, about 5.2 wt% or less, about 5.0 wt% or less, or 4.8 wt% or less, or 4.5 wt% or less, about 4.2 wt% or less, or 4 wt% or less.

Particularly, when 1-hexene is used as the comonomer in the copolymerization process, the input of 1-hexene as a comonomer may be about 3.65 wt% or more, about 3.7 wt% or more, about 3.75 wt% or more, and about 5.2 wt% or less, or about 5.0 wt% or less, or about 4.8 wt% or less, or 4.5 wt% or less, about 4.2 wt% or less, or 4 wt% or less, based on the total input weight of ethylene.

For example, the copolymerization process may be performed with an ethylene feed rate of 10.0 kg/hr, and a comonomer 1-hexene feed rate of 6.2 mL/min or more to 6.8 mL/min or less, or from more than 6.2 mL/min to 6.5 mL/min or less.

In the present disclosure, the first ethylene-alpha olefin copolymer may be prepared by copolymerizing ethylene and a comonomer in the presence of the above-described catalyst composition while introducing hydrogen gas. The amounts of hydrogen gas and an α-olefin comonomer may be determined based on the desired properties of the first ethylene-alpha-olefin copolymer.

More specifically, the hydrogen gas may be introduced in an amount of about 5 ppm or more to about 120 ppm or less, on the basis of the total weight of ethylene. More specifically, on the basis of the total weight of ethylene, hydrogen may be introduced in about 5.5 ppm or more, or about 7 ppm or more, or about 8.5 ppm or more, or about 10 ppm or more, or about 12 ppm or more, or about 15 ppm or more, or about 16 ppm or more, or about 17.5 ppm or more, or about 17.8 ppm or more, or 18 ppm or more, and about 100 ppm or less, or about 80 ppm or less, or about 65 ppm or less, or about 50 ppm or less, or about 40 ppm or less, or about 35 ppm or less, or about 30 ppm or less, or about 25 ppm or less, or about 20 ppm or less, or about 19 ppm or less, or about 18.5 ppm or less, or about 18.3 ppm or less.

For example, in the copolymerization process, the ethylene feed rate may be 10.0 kg/hr, while the hydrogen feed rate may be from about 1.75 g/hr or more to about 1.85 g/hr or less, or from more than about 1.75 g/hr to less than about 1.85 g/hr.

For example, the hydrogen gas may be introduced in an amount of 35 ppm to 250 ppm, 40 ppm to 200 ppm, 50 ppm to 190 ppm, 55 ppm to 180 ppm, 58 ppm to 170 ppm, or 60 ppm to 145 ppm based on the weight of ethylene.

In the step of supporting the catalyst precursor on the cocatalyst-supported support, the supported catalyst may be prepared by adding the first and second transition metal compounds to the cocatalyst-supported support, stirring, and then further adding a cocatalyst.

In the hybrid supported metallocene catalyst according to the embodiment, the amount of the carrier, cocatalyst, cocatalyst-supported support and transition metal compound used may be appropriately adjusted depending on desired properties or effects of the supported catalyst.

Meanwhile, when the molar ratio of the first transition metal compound and the second transition metal compound (first transition metal compound: second transition metal compound) is less than 1:0.3, it is difficult to produce ultra-low-density polyethylene as comonomer incorporation decreases. When the ratio exceeds 1:5.5, it is difficult to reproduce the molecular structure of the desired polymer.

At this time, a supported amount of the metallocene compound supported on a silica support may be 0.01 mmol/g to 1 mmol/g based on 1 g of the carrier. That is, it is preferable to control the amount within the above-described range in consideration of the effect that the metallocene compound contributes to the catalyst.

When preparing the hybrid supported catalyst, a reaction solvent may be a hydrocarbon solvent such as pentane, hexane, and heptane; or an aromatic solvent such as benzene and toluene.

For details on the preparation method of the supported catalyst, refer to Examples to be described later. However, the preparation method of the supported catalyst is not limited to this description. The preparation method may further include a step which is usually carried out in the technical field of the present invention, and the step(s) of the preparation method may be changed by the step(s) usually changeable.

Meanwhile, the above-described polyethylene copolymer may be prepared by a method including the step of copolymerizing ethylene and an alpha-olefin in the presence of the above-described hybrid supported metallocene catalyst.

The above-described hybrid supported catalyst can exhibit excellent supporting performance, catalytic activity, and high comonomer incorporation, and can prepare a polyethylene copolymer capable of producing a biaxially stretched film having excellent expandable processing area characteristics and mechanical properties.

The preparation of (a) the first ethylene-alpha olefin copolymer may be carried out by a slurry polymerization method using ethylene and an alpha-olefin as raw materials in the presence of the above-described hybrid supported catalyst with a conventional equipment and contact technology.

The preparation method of (a) the first ethylene-alpha olefin copolymer may copolymerize ethylene and an alpha-olefin using a continuous slurry polymerization reactor, a loop slurry reactor, or the like, but the present disclosure is not limited thereto.

That is, in the case of the hybrid supported metallocene catalyst of the present disclosure in which the first metallocene compound and the second metallocene compound are supported within the above molar ratio, both processability and shrinkage can be further improved along with mechanical properties of the polyethylene copolymer due to the interaction of two or more catalysts.

In the hybrid supported metallocene catalyst of the present disclosure, the carrier for supporting the first metallocene compound and the second metallocene compound, the additionally included cocatalyst, and the polymerization process are as described above with respect to (a) the first ethylene-alpha olefin copolymer, and the specific details are omitted.

As described above, (a) the first ethylene-alpha olefin copolymer according to the present disclosure may be prepared by copolymerizing ethylene and alpha-olefin using the above-described supported metallocene catalyst.

By the above preparation method, (a) the first ethylene-alpha olefin copolymer having the above physical properties may be prepared.

### (b) Second ethylene-alpha olefin copolymer

In the polyethylene composition of the present disclosure, (b) the second ethylene-alpha olefin copolymer, which has excellent flowability, excellent stretching stability and shrinkage resistance, is blended with (a) the above-described first ethylene-alpha olefin copolymer, thereby adjusting the balance between mechanical properties and elongation. Accordingly, it may impart characteristics suitable for manufacturing a biaxially stretched film having high shrink resistance, as well as excellent printability and transparency, while maintaining mechanical properties, productivity, and stretching stability equal to or superior to those of the conventional ones.

Specifically, (b) the second ethylene-alpha olefin copolymer has a density of 0.870 g/cm³ to 0.920 g/cm³, a melt index (MI_{2.16}, at 190 °C under a load of 2.16 kg) of 3.0 g/10 min to 10.0 g/10 min, and a molecular weight distribution (Mw/Mn) of 2.0 or more to 4.0 or less.

Preferably, (b) the second ethylene-alpha olefin copolymer may have a density of at least 0.880 g/cm³, or at least 0.890 g/cm³, or at least 0.895 g/cm³, and at most 0.915 g/cm³, or at most 0.910 g/cm³, or at most 0.905 g/cm³.

The melt index (MI_{2.16}, at 190 °C under a load of 2.16 kg) of (b) the second ethylene-alpha olefin copolymer may be at least 4.0 g/10 min, or at least 5.0 g/10 min, or at least 5.5 g/10 min, and at most 9.0 g/10 min, or at most 8.0 g/10 min, or at most 7.0 g/10 min.

The molecular weight distribution (Mw/Mn) of (b) the second ethylene-alpha olefin copolymer is 2.0 or more to 4.0 or less.

In addition, (b) the second ethylene-alpha olefin copolymer may have a number average molecular weight (Mn) of 20000 g/mol or more to 50000 g/mol or less and a weight average molecular weight (Mw) of 50000 g/mol or more to 100000 g/mol or less.

Preferably, the number average molecular weight (Mn) of the second ethylene-alpha olefin copolymer (b) may be at least 23000 g/mol, or at least 25000 g/mol, or at least 28000 g/mol, and at most 45000 g/mol, or at most 40000 g/mol, or at most 35000 g/mol.

The weight average molecular weight (Mw) of (b) the second ethylene-alpha olefin copolymer may be at least 55000 g/mol, or at least 60000 g/mol, or at least 65000 g/mol, and at most 90000 g/mol, or at most 80000 g/mol, or at most 70000 g/mol.

The molecular weight distribution (Mw/Mn) of the second ethylene-alpha olefin copolymer (b) may be 2.1 or greater, 2.2 or greater, or 2.3 or greater and 3.5 or less, 3.0 or less, or 2.5 or less.

In particular, (b) the second ethylene-alpha olefin copolymer may have at least one of the above-described physical properties, and may have all of the above-described physical properties to exhibit excellent mechanical strength.

In the present disclosure, (b) the second ethylene-alpha olefin copolymer may comprise at least one alpha-olefin selected from the group consisting of 1-butene, 1-pentene, 1-hexene, 4-methyl-1-pentene, 1-octene, 1-decene, 1-dodecene, 1-tetradecene, 1-hexadecene, 1-octadecene, 1-eicosene, and a mixture thereof together with ethylene.

Preferably, (b) the second ethylene-alpha olefin copolymer may be an ethylene/1-octene copolymer.

When (b) the second ethylene-alpha olefin copolymer is the above-described copolymer, the above-described physical properties can be more easily achieved. However, the type of (b) the second ethylene-alpha olefin copolymer is not limited thereto, and various types known in the art may be used as long as they can exhibit the above-mentioned physical properties.

Meanwhile, (b) the second ethylene-alpha olefin copolymer having the above physical properties may be prepared in the presence of a metallocene catalyst.

Specifically, (b) the second ethylene-alpha olefin copolymer may be prepared by copolymerizing ethylene and a comonomer in the presence of a catalyst composition including a metallocene compound represented by the following Chemical Formula 3: 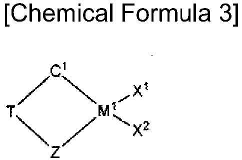 in Chemical Formula 3,
M¹ is a Group 4 transition metal;
X¹ and X² are the same as or different from each other, and are each independently halogen, a nitro group, an amido group, a phosphine group, a phosphide group, a C1 to C30 hydrocarbyl group, a C1 to C30 hydrocarbyloxy group, a C2 to C30 hydrocarbyloxyhydrocarbyl group, -SiH₃, a C1 to C30 hydrocarbyl(oxy)silyl group, a C1 to C30 sulfonate group, or a C1 to C30 sulfone group;
Z is -O-, -S-, -NRₐ-, or -PRₐ-;
Rₐ is any one of hydrogen, a C1 to C20 hydrocarbyl group, a C1 to C20 hydrocarbyl(oxy)silyl group, and a C1 to C20 silylhydrocarbyl group;
T is 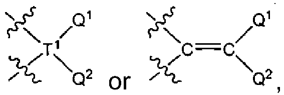
T¹ is C, Si, Ge, Sn or Pb,
Q¹ and Q² are the same as or different from each other, and are each independently any one of hydrogen, a C1 to C30 hydrocarbyl group, a C1 to C30 hydrocarbyloxy group, a C2 to C30 hydrocarbyloxyhydrocarbyl group, -SiH₃, a C1 to C30 hydrocarbyl(oxy)silyl group, a halogen-substituted C1 to C30 hydrocarbyl group and -NR_{b}R_{c};
R_{b} and R_{c} are each independently at least one of hydrogen and a C1 to C30 hydrocarbyl group, or are connected with each other to form an aliphatic or aromatic ring; and
C¹ is any one of the ligands represented by the following Chemical Formulae 3a to 3d, 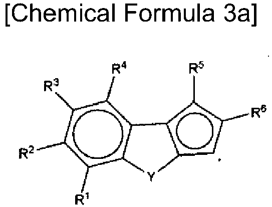 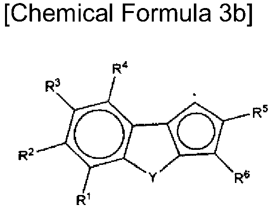 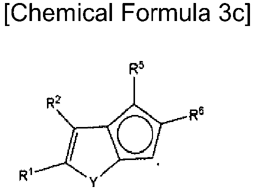 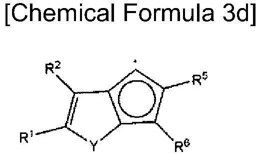
in Chemical Formulae 3a to 3d,
Y is O or S, and
R¹ to R⁶ are the same as or different from each other, and are each independently any one of hydrogen, a C1 to C30 hydrocarbyl group, and a C1 to C30 hydrocarbyloxy group.

Unless otherwise specified herein, following terms may be defined as follows.

The hydrocarbyl group is a monovalent functional group in a hydrogen-removed form from a hydrocarbon, and may include an alkyl group, an alkenyl group, an alkynyl group, an aryl group, an aralkyl group, an aralkenyl group, an aralkynyl group, an alkylaryl group, an alkenylaryl group, an alkynylaryl group, and the like. The C1 to C30 hydrocarbyl group may be a C1 to C20 or C1 to C10 hydrocarbyl group. For example, the hydrocarbyl group may be a linear, branched or cyclic alkyl. More specifically, the C1 to C30 hydrocarbyl group may be a linear, branched or cyclic alkyl group such as a methyl group, an ethyl group, an n-propyl group, an iso-propyl group, an n-butyl group, an iso-butyl group, a tert-butyl group, an n-pentyl group, an n- hexyl group, an n-heptyl group and a cyclohexyl group; or an aryl group such as phenyl, biphenyl, naphthyl, anthracenyl, phenanthrenyl, or fluorenyl. Moreover, it may be alkylaryl such as methylphenyl, ethylphenyl, methylbiphenyl, and methylnaphthyl, or arylalkyl such as phenylmethyl, phenylethyl, biphenylmethyl, and naphthylmethyl. It may also be alkenyl such as allyl, ethenyl, propenyl, butenyl, and pentenyl.

The hydrocarbyloxy group is a functional group in which the hydrocarbyl group is bonded to oxygen. Specifically, the C1 to C30 hydrocarbyloxy group may be a C1 to C20 or C1 to C10 hydrocarbyloxy group. For example, the hydrocarbyloxy group may be a linear, branched or cyclic alkyl. More specifically, the C1 to C30 hydrocarbyloxy group may be a linear, branched or cyclic alkoxy group such as a methoxy group, an ethoxy group, an n-propoxy group, an iso-propoxy group, an n-butoxy group, an iso-butoxy group, a tert-butoxy group, an n-pentoxy group, an n-hexyloxy group, an n-heptoxy group and a cyclohexyloxy group; or an aryloxy group such as a phenoxy group and a naphthalenoxy group.

The hydrocarbyloxyhydrocarbyl group is a functional group in which at least one hydrogen of the hydrocarbyl group is substituted with at least one hydrocarbyloxy group. Specifically, the C2 to C30 hydrocarbyloxyhydrocarbyl group may be a C2 to C20 or C2 to C15 hydrocarbyloxyhydrocarbyl group. For example, the hydrocarbyloxyhydrocarbyl group may be a linear, branched or cyclic alkyl. More specifically, the C2 to C30 hydrocarbyloxyhydrocarbyl group may be an alkoxyalkyl group such as a methoxymethyl group, a methoxyethyl group, an ethoxymethyl group, an iso-propoxymethyl group, an iso-propoxyethyl group, an iso-propoxyhexyl group, a tert-butoxymethyl group, a tert-butoxyethyl group and a tert-butoxyhexyl group; or an aryloxyalkyl group such as a phenoxyhexyl group.

The hydrocarbyl(oxy)silyl group is a functional group in which one to three hydrogens of -SiH₃ are substituted with one to three hydrocarbyl or hydrocarbyloxy groups. Specifically, the C1 to C30 hydrocarbyl(oxy)silyl group may be a C1 to C20, C1 to C15, C1 to C10, or C1 to C5 hydrocarbyl(oxy)silyl group. More specifically, the C1 to C30 hydrocarbyl(oxy)silyl group may be an alkylsilyl group such as a methylsilyl group, a dimethylsilyl group, a trimethylsilyl group, a dimethylethylsilyl group, a diethylmethylsilyl group, or a dimethylpropylsilyl group; an alkoxysilyl group such as a methoxysilyl group, a dimethoxysilyl group, a trimethoxysilyl group, or a dimethoxyethoxysilyl group; or an alkoxyalkylsilyl group such as a methoxydimethylsilyl group, a diethoxymethylsilyl group, or a dimethoxypropylsilyl group.

The C1 to C20 silylhydrocarbyl group is a functional group in which at least one hydrogen of the hydrocarbyl group is substituted with a silyl group. The silyl group may be -SiH₃ or a hydrocarbyl(oxy)silyl group. Specifically, the C1 to C20 silylhydrocarbyl group may be a C1 to C15 or C1 to C10 silylhydrocarbyl group. More specifically, C1 to C20 silylhydrocarbyl group may be a silylalkyl group such as -CH₂-SiH₃; an alkylsilylalkyl group such as a methylsilylmethyl group, a methylsilylethyl group, a dimethylsilylmethyl group, a trimethylsilylmethyl group, a dimethylethylsilylmethyl group, a diethylmethylsilylmethyl group, or a dimethylpropylsilylmethyl group; or an alkoxysilylalkyl group such as a dimethylethoxysilylpropyl group.

The halogen may be fluorine (F), chlorine (Cl), bromine (Br) or iodine (I).

The sulfonate group has a structure of -O-SO₂-R_{d}, and R_{d} may be a C1 to C30 hydrocarbyl group. Specifically, the C1 to C30 sulfonate group may be a methanesulfonate group, a phenylsulfonate group, or the like.

The C1 to C30 sulfone group has a structure of -R^{e***'***}-SO₂-R^{e"}, and R^{e'} and R^{e"} may be the same as or different from each other, and may each independently be any one of a C1 to C30 hydrocarbyl group. Specifically, the C1 to C30 sulfone group may be a methylsulfonylmethyl group, a methylsulfonylpropyl group, a methylsulfonylbutyl group, a phenylsulfonylpropyl group, or the like.

In this disclosure, "two neighboring substituents are connected with each other to form an aliphatic or aromatic ring" means that the atom(s) of two substituents and the atom(s) to which the two substituents are bonded are connected with each other to form a ring. Specifically, examples in which R_{b} and R_{c} or R_{b'} and R_{c'} of - NR_{b}R_{c} or -NR_{b'}R_{c'} are connected with each other to form an aliphatic ring include a piperidinyl group, and examples in which R_{b} and R_{c} or R_{b'} and R_{c'} of -NR_{b}R_{c} or -NR_{b'}R_{c'} are connected with each other to form an aromatic ring include a pyrrolyl group.

The Group 4 transition metal may be titanium (Ti), zirconium (Zr), hafnium (Hf), or rutherfordium (Rf), and may specifically be titanium (Ti), zirconium (Zr), or hafnium (Hf). More specifically, it may be zirconium (Zr), or hafnium (Hf), but the present disclosure is not limited thereto.

Further, the Group 13 element may be boron (B), aluminum (Al), gallium (Ga), indium (In), or thallium (Tl), and may specifically be boron (B) or aluminum (Al), but the present disclosure is not limited thereto.

The above-mentioned substituents may optionally be substituted with one or more substituents selected from the group consisting of a hydroxyl group; halogen; a hydrocarbyl group; a hydrocarbyloxy group; a hydrocarbyl group or a hydrocarbyloxy group containing at least one heteroatom of Group 14 to 16 heteroatoms; a silyl group; a hydrocarbyl(oxy)silyl group; a phosphine group; a phosphide group; a sulfonate group; and a sulfone group within the range of exhibiting the same or similar effect as the desired effect.

In the present disclosure, 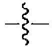 means a bond connected to another substituent.

Specifically, in Chemical Formula 3, Z is -NRₐ-, wherein the Rₐ may be a C1 to C10 hydrocarbyl group. Specifically, the Rₐ may be a linear or branched C1 to C6 alkyl group. More specifically, it may be a tert-butyl group.

In Chemical Formula 3, T is 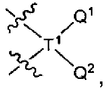 wherein T¹ is carbon (C) or silicon (Si), Q¹ and Q² may each independently be hydrogen, a C1 to C30 hydrocarbyl group, or a C1 to C30 hydrocarbyloxy group. Specifically, Q¹ and Q² may each be a C1 to C10 hydrocarbyl group or a C2 to C12 hydrocarbyloxyhydrocarbyl group. More specifically, Q¹ and Q² may each be a C1 to C6 alkyl group, or a C1 to C6 alkoxy-substituted C1 to C6 alkyl group. For example, Q¹ and Q² may each independently be hydrogen, methyl, ethyl, or tert-butoxy-substituted hexyl. More specifically, T¹ is silicon (Si); both Q¹ and Q² are methyl, or one of Q¹ and Q² is methyl and the other is tert-butoxy-substituted hexyl.

Specifically, the metallocene compound represented by the Chemical Formula 3 may be a compound represented by any one of the following Chemical Formulae 3-1 to 3-4.

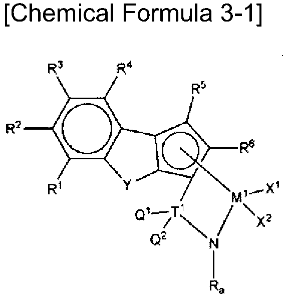

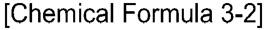

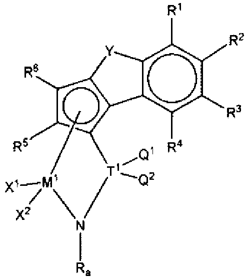

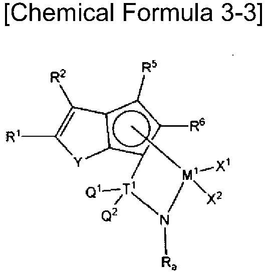

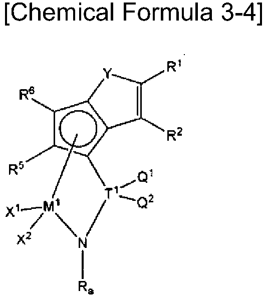

In Chemical Formulae 3-1 to 3-4, M¹, X¹, X², Rₐ, T¹, Q¹, Q², Y, and R¹ to R⁶ are the same as defined in Chemical Formula 3.

In Chemical Formula 3, R¹ to R⁴ may each be hydrogen or a C1 to C10 hydrocarbyl group, and R⁵ and R⁶ may each be a C1 to C10 hydrocarbyl group. Specifically, R¹ to R⁴ may each be hydrogen or C1 to C10 alkyl, and R⁵ and R⁶ may each be C1 to C10 alkyl. More specifically, R¹ to R⁴ may each be hydrogen or methyl, and R⁵ and R⁶ may be methyl.

In Chemical Formula 3, M¹ may be titanium (Ti), zirconium (Zr) or hafnium (Hf), and preferably titanium (Ti).

In addition, in Chemical Formula 3, each of X¹ and X² may be halogen, a C1 to C10 alkyl group, or a C1 to C6 alkyl group, and specifically chlorine or methyl.

In addition, in Chemical Formula 3, the metallocene compound may be represented by one of the following structural formulae.

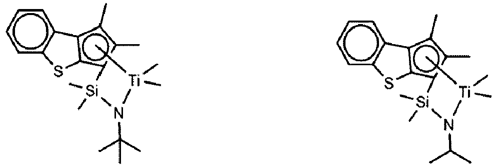

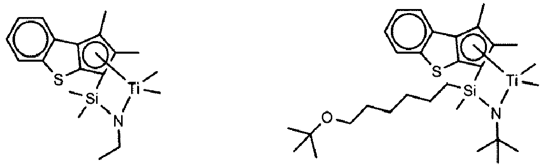

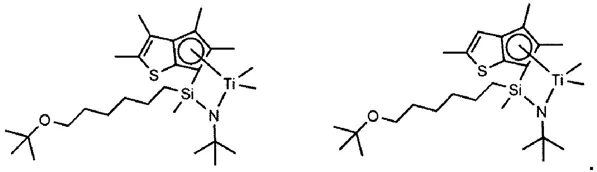

The metallocene compound represented by the above structural formulae may be synthesized by applying known reactions, and a more detailed synthesis method may be understood with reference to Examples and Synthesis Examples.

As described above, the transition metal compound represented by Chemical Formula 3 used in the present disclosure controls the degree of introduction of alpha-olefin monomers in the copolymerization process due to the structural characteristics of the catalyst and exhibits the above-described density, resulting in excellent flowability and stretching processability.

In the present disclosure, the polymerization reaction may be performed by continuously polymerizing ethylene and alpha-olefin monomers while continuously introducing hydrogen in the presence of a catalyst composition containing at least one transition metal compound represented by the Chemical Formula 3. Specifically, it may be performed while introducing hydrogen at 5 cc/min to 100 cc/min.

The hydrogen gas suppresses a rapid reaction of the transition metal compound at the initial stage of polymerization, and serves to terminate the polymerization reaction. Accordingly, an ethylene/alpha-olefin copolymer having a narrow molecular weight distribution can be effectively produced by using the hydrogen gas and adjusting the amount thereof.

For example, the hydrogen may be introduced at 5 cc/min or more, 7 cc/min or more, 8.5 cc/min or more, 10 cc/min or more, 12 cc/min or more, or 15 cc/min or more, and 100 cc/min or less, 50 cc/min or less, 45 cc/min or less, 35 cc/min or less, 30 cc/min or less, 29 cc/min or less, 25 cc/min or less, 20 cc/min or less, 18 cc/min or less, or 16 cc/min or less. When added under the above conditions, the ethylene/alpha-olefin copolymer to be produced can realize the physical properties of the present disclosure.

When the hydrogen gas is introduced at less than 5 cc/min, the polymerization reaction is not uniformly terminated, making it difficult to prepare an ethylene/alpha-olefin copolymer having desired physical properties. When the hydrogen gas is introduced at more than 100 cc/min, the termination reaction occurs too quickly, and thus an ethylene/alpha-olefin copolymer having a very low molecular weight may be produced.

Meanwhile, the second ethylene-alpha olefin copolymer of the present disclosure may be produced by copolymerizing ethylene and the comonomer by introducing hydrogen gas in the presence of the above catalyst composition. The input amounts of the hydrogen gas and the α-olefin comonomer may be determined based on the desired properties of the second ethylene-alpha olefin copolymer.

In the polymerization process employing an α-olefin as the comonomer, the amount of the α-olefin may be about 10 wt% or more to about 48 wt% or less, based on the total weight of ethylene. Specifically, the amount of the α-olefin may be at least about 12 wt%, or at least about 15 wt%, or at least about 18 wt%, or at least about 20 wt%, or at least about 22 wt%, or at least about 25 wt%, or at least about 28 wt%, or at least about 30 wt%, or at least about 32 wt%, or at least about 35 wt%. Also, the amount of the α-olefin may be at most about 46 wt%, or at most about 45 wt%, or at most about 43.5 wt%, or at most about 42 wt%, or at most about 40 wt%, or at most about 38.5 wt%, or at most about 38 wt%, or at most about 37.5 wt%, or at most about 37 wt%, or at most about 36.5 wt%, or at most about 36 wt%.

More specifically, when 1-octene is used as the comonomer in the copolymerization process, the amount of 1-octene may be about 28 wt% or more, or about 30 wt% or more, or about 32 wt% or more, or about 35 wt% or more, based on the total weight of ethylene. The amount of 1-octene may be also be about 40 wt% or less, or about 38.5 wt% or less, or about 38 wt% or less, or about 37.5 wt% or less, or about 37 wt% or less, or about 36.5 wt% or less, or about 36 wt% or less.

For example, when 1-octene is used as the comonomer, with an ethylene feed rate of 0.87 kg/hr, the 1-octene feed rate may be 0.25 kg/hr or more to 0.35 kg/hr or less, or from 0.28 kg/hr or more to 0.32 kg/hr or less.

In addition, the polymerization reaction may be performed at 100 °C to 200 °C, and the crystalline distribution and the molecular weight distribution in the ethylene/alpha-olefin copolymer may be more easily controlled by adjusting the polymerization temperature together with the hydrogen input. Specifically, the polymerization reaction may be performed at 100 °C to 200 °C, 120 °C to 180 °C, 130 °C to 170 °C, or 140 °C to 160 °C, but is not limited thereto.

In the present disclosure, a cocatalyst may be additionally used in the catalyst composition to activate the transition metal compound of the Chemical Formula 3. The cocatalyst is an organometallic compound containing a Group 13 metal, and may specifically include one or more selected from Chemical Formulae 4 to 6 below.

[Chemical Formula 4] R₈-[Al(R₇)-O]ₙ-R₉

in Chemical Formula 4,
R₇, R₈ and R₉ are each independently hydrogen, halogen, C₁₋₂₀ hydrocarbyl, or halogen-substituted C₁₋₂₀ hydrocarbyl, and
n is an integer of 2 or more,

   [Chemical Formula 5] D(R₁₀)₃
in Chemical Formula 5,
D is aluminum or boron, and
R₁₀ are each independently halogen, C₁₋₂₀ hydrocarbyl, C₁₋₂₀ hydrocarbyloxy, or halogen-substituted C₁₋₂₀ hydrocarbyl,

   [Chemical Formula 6] [L-H]⁺[W(A)₄]⁻ or [L]⁺[W(A)₄]⁻
in Chemical Formula 6,
L is a neutral or cationic Lewis base,
H is a hydrogen atom,
W is a group 13 element, and
A are each independently any one of C₁₋₂₀ hydrocarbyl; C₁₋₂₀ hydrocarbyloxy; and a substituent in which one or more hydrogen atoms of these substituents are substituted with one or more substituents selected from halogen, C₁₋₂₀ hydrocarbyloxy and C₁₋₂₀ hydrocarbyl(oxy)silyl.

Specifically, in Chemical Formula 6, [L-H]⁺ is a Bronsted acid.

For example, the [L-H]⁺ is trimethylammonium; triethylammonium; tripropylammonium; tributylammonium; diethylammonium; trimethylphosphonium; or triphenylphosphonium, and [L]⁺ is N,N-diethylanilinium; or triphenylcarbonium.

In addition, in Chemical Formula 6, W may be B³⁺ or Al³.

The compound represented by the Chemical Formula 4 may function as an alkylating agent and an activating agent, the compound represented by the Chemical Formula 5 may function as an alkylating agent, and the compound represented by the Chemical Formula 6 may function as an activating agent.

More specifically, the compound of Chemical Formula 4 may be an alkylaluminoxane-based compound in which repeating units are bonded in a linear, circular or network shape, and specific examples thereof may include methylaluminoxane (MAO), ethylaluminoxane, isobutylaluminoxane or tert-butylaluminoxane and the like. Non-limiting examples of the compound represented by Chemical Formula 4 may include methyl aluminoxane, ethyl aluminoxane, isobutyl aluminoxane, tert-butyl aluminoxane, and the like.

In addition, non-limiting examples of the compound represented by Chemical Formula 5 may include trimethylaluminum, triethylaluminum, triisobutylaluminum, tripropylaluminum, tributylaluminum, dimethylchloroaluminum, triisopropylaluminum, tri-sec-butylaluminum, tricyclopentyl aluminum, tripentyl aluminum, triisopentyl aluminum, trihexyl aluminum, trioctyl aluminum, ethyldimethyl aluminum, methyl diethyl aluminum, triphenyl aluminum, tri-p-tolyl aluminum, dimethyl aluminum methoxide, dimethyl aluminum ethoxide, and the like.

In addition, non-limiting examples of the compound represented by Chemical Formula 6 may include trimethylammonium tetrakis(pentafluorophenyl)borate, triethylammonium tetrakis(pentafluorophenyl)borate, N,N-dimethylanilinium tetrakis (pentafluorophenyl) borate, N,N-dimethylanilinium n-butyltris(pentafluorophenyl) borate, N,N-dimethylanilinium benzyltris(pentafluorophenyl)borate, N,N-dimethylanilinium tetrakis(4-(t-butyldimethylsilyl)-2,3,5,6-tetrafluorophenyl)borate, N,N-dimethylanilinium tetrakis(4-(triisopropylsilyl)-2,3,5,6-tetrafluorophenyl)borate, N,N-dimethylanilinium pentafluorophenoxytris(pentafluorophenyl)borate, N,N-dimethyl-2,4,6-trimethylanilinium tetrakis(pentafluorophenyl)borate, trimethylammonium tetrakis(2,3,4,6-tetrafluorophenyl) borate, N,N-dimethylanilinium tetrakis(2,3,4,6-tetrafluorophenyl)borate, hexadecyldimethylammonium tetrakis(pentafluorophenyl)borate, N-methyl-N-dodecylanilinium tetrakis(pentafluorophenyl)borate, methyldi(dodecyl)ammonium tetrakis(pentafluorophenyl)borate, and the like.

Among the above compounds, the cocatalyst may be, more specifically, an alkylaluminoxane-based cocatalyst such as methylaluminoxane.

The amount of the cocatalyst used may be appropriately adjusted according to the physical properties or effects of the desired hybrid supported metallocene catalyst.

The cocatalyst may be used in an appropriate amount so that the activation of the transition metal compound of Chemical Formula 3 can sufficiently proceed. The amount of the cocatalyst used may be appropriately adjusted according to the physical properties or effects of the desired hybrid supported metallocene catalyst.

In the present disclosure, the transition metal compound of Chemical Formula 3 may be used in an unsupported form or in a supported form on a carrier.

When the transition metal compound of Chemical Formula 3 is supported on a carrier, a weight ratio of the transition metal compound and the carrier may be 1:10 to 1:1000, more specifically 1:10 to 1:500. When the carrier and the transition metal compound are included within the above weight ratio, an optimal shape may be exhibited. In addition, when the cocatalyst is supported on the carrier, a weight ratio of the cocatalyst and the carrier may be 1:1 to 1:100, more specifically 1:1 to 1:50. When the cocatalyst and the carrier are included within the above weight ratio, it is possible to improve the activity of the catalyst and to optimize the microstructure of the polymer to be produced.

Meanwhile, the carrier may be silica, alumina, magnesia or a mixture thereof, or may be used in a state containing highly reactive hydroxyl groups or siloxane groups on its surface by removing moisture from the surface after drying these materials at a high temperature. Further, the carrier dried at a high temperature commonly contains oxide, carbonate, sulfate, and nitrate such as Na₂O, K₂CO₃, BaSO₄, Mg(NO₃)_{2,} and the like.

A drying temperature of the carrier may preferably be about 200 °C to 800 °C, more preferably about 300 °C to 600 °C, and most preferably about 300 °C to 400 °C. When the drying temperature of the carrier is less than 200 °C, surface moisture may react with the cocatalyst due to excessive moisture. When it is greater than 800 °C, pores on the surface of the carrier may be combined to reduce the surface area, and a lot of hydroxyl groups may be lost on the surface and only siloxane groups may remain, thus decreasing the reaction sites with the cocatalyst, which is not preferable.

The amount of the hydroxyl groups on the surface of the carrier may preferably be 0.1 mmol/g to 10 mmol/g, more preferably 0.5 mmol/g to 5 mmol/g. The amount of the hydroxyl groups on the surface of the carrier may be controlled by the preparation method and conditions of the carrier, or drying conditions, for example, temperature, time, vacuum, spray drying, or the like.

In addition, an organoaluminum compound is further added during the polymerization reaction to remove moisture from the reactor, and the polymerization reaction may proceed in the presence of the organoaluminum compound. Specific examples of such organoaluminum compounds may include trialkyl aluminum, dialkyl aluminum halide, alkyl aluminum dihalide, aluminum dialkyl hydride, or alkyl aluminum sesqui halide. More specific examples thereof may include Al(C₂H₅)₃, Al(C₂H₅)₂H, Al(C₃H₇)₃, Al(C₃H₇)₂H, Al(i-C₄H₉)₂H, Al(C₈H₁₇)₃, Al(C₁₂H₂₅)₃, Al(C₂H₅)(C₁₂H₂₅)₂, Al(i-C₄H₉)(C₁₂H₂₅)₂, Al(i-C₄H₉)₂H, Al(i-C₄H₉)₃, (C₂H₅)₂AlCl, (i-C₃H₉)₂AlCl, (C₂H₅)₃Aₗ₂Cl₃ and the like. These organoaluminum compounds may be continuously added to the reactor and may be added at about 0.1 to 10 mols per 1 kg of reaction medium added to the reactor for adequate moisture removal.

In addition, the polymerization pressure may be about 1 Kgf/cm² to about 100 Kgf/cm², preferably about 1 Kgf/cm² to about 50 Kgf/cm², and more preferably about 5 Kgf/cm² to about 30 Kgf/cm².

In addition, when the transition metal compound is used in a supported form on a carrier, the transition metal compound may be dissolved or diluted in an aliphatic hydrocarbon solvent having 5 to 12 carbon atoms such as pentane, hexane, heptane, nonane, decane, and an isomer thereof, an aromatic hydrocarbon solvent such as toluene, and benzene, or a hydrocarbon solvent substituted with chlorine such as dichloromethane, and chlorobenzene, and then added. The solvent used herein is preferably used after removing a small amount of water or air, which acts as a catalyst poison, by treating with a small amount of alkyl aluminum. It is also possible to further use the cocatalyst.

As described above, (b) the second ethylene-alpha olefin copolymer may be prepared by copolymerizing ethylene and an alpha-olefin using the metallocene catalyst described above.

Specifically, the process for producing (b) the second ethylene-alpha olefin copolymer may be carried out through a solution polymerization by applying conventional equipment and contact techniques using ethylene and alpha-olefin as raw materials in the presence of the catalyst composition comprising the aforementioned metallocene compounds.

In addition, the catalyst composition may be dissolved or diluted in an aliphatic hydrocarbon solvent having 5 to 12 carbon atoms such as pentane, hexane, heptane, nonane, decane, and an isomer thereof; an aromatic hydrocarbon solvent such as toluene, and benzene; or a hydrocarbon solvent substituted with chlorine such as dichloromethane, and chlorobenzene; and then employed in the subsequent polymerization reaction. In this disclosure, the solvent may be preferably used after removing a small amount of water or air, which acts as a catalyst poison, by treating with a small amount of alkyl aluminum. It is also possible to further use the cocatalyst.

The process for producing (b) the second ethylene-alpha olefin copolymer may include a copolymerization of ethylene and alpha-olefin using a continuous polymerization reactor, but it is not limited to this method and condition.

By the above preparation method, (b) the second ethylene-alpha olefin copolymer having the above physical properties can be produced.

### Biaxially Stretched Film

The polyethylene composition of the present disclosure, having the above physical properties, can be processed into a biaxially stretched film that maintains excellent mechanical properties, productivity, and stretching stability, and exhibits high shrinking resistance, printability, and transparency.

Meanwhile, the biaxially stretched film may be manufactured by a conventional film manufacturing method except for using the polyethylene composition described above.

For example, in order to manufacture a polyethylene biaxially stretched film according to the present disclosure, a lab extruder line manufactured from Bruckner may be used (L/D ratio: 42, Screw diameter: 25 mm, Melt/T-Die temperature: 220 °C) to prepare a polyethylene composition sheet having a thickness of 0.75 mm. Thereafter, a polyethylene biaxially stretched film may be prepared by biaxially stretching the polyethylene composition sheet with dimensions of 90 mm X 90 mm in length and width using KARO 5.0 equipment. Specific methods and conditions are as described in Test Example 3 to be described later.

In addition, the polyethylene biaxially stretched film according to the present disclosure may further include an additive well known in the art in addition to the above-described polyethylene copolymer. Specifically, such an additive may include a solvent, a heat stabilizer, an antioxidant, a UV absorber, a light stabilizer, a metal deactivator, a filler, a reinforcing agent, a plasticizer, a lubricant, an emulsifier, a pigment, an optical brightener, a flame retardant, an antistatic agent, a foaming agent, and the like. The type of the additive is not particularly limited, and general additives known in the art may be used.

The polyethylene biaxially stretched film according to one embodiment of the present disclosure prepared by the above method may have improved performance with excellent expandable processing area characteristics and superior mechanical properties.

The polyethylene biaxially stretched film may have a haze of 0.5% or more, or 1.0% or more, or 1.5% or more, or 1.6% or more, or 1.86% or more, or 1.9% or more, as measured according to ASTM 1003 standard, and may be 8.5% or less, or 8.2% or less, or 8.0% or less, or 7.8% or less, or 7.7% or less, or 7.5% or less, or 7.0% or less, or 6.8% or less, or 6.5% or less, or 6.3% or less, or 6.0% or less, or 5.8% or less, or 5.6% or less.

The polyethylene biaxially stretched film may have a gloss (at 45°) of 80 GU or more, or from 80 GU or more to 100 GU or less, as measured according to ASTM 2457 standard. Preferably, the gloss may be at least 85 GU, at least 88 GU, at least 90 GU, or at least 93 GU.

In particular, the polyethylene biaxially stretched film can be stretched at a machine direction (MD) draw ratio of 4 or more, or 5 or more, and a traverse direction (TD) draw ratio of 7 or more, or 8 or more.

The polyethylene biaxially stretched film may have a tensile strength in the MD direction of 70 MPa or more, or 75 MPa or more, or 78 MPa or more, or 80 MPa or more, or 90 MPa or more, or 95 MPa or more, or 100 MPa or more, or 110 MPa or more, or 120 MPa or more, and 150 MPa or less, or 130 MPa or less, as measured according to ASTM D 882 standard. The polyethylene biaxially stretched film may have a tensile strength in the TD direction of 180 MPa or more, or 190 MPa or more, or 195 MPa or more, or 200 MPa or more, or 210 MPa or more, or 220 MPa or more, or 230 MPa or more, and 280 MPa or less, or 270 MPa or less, or 265 MPa or less, as measured according to ASTM D 882 standard.

The average of an MD tensile strength and a TD tensile strength of the biaxially stretched film, as measured according to ASTM D 882 standard, may be 150 MPa or more. Preferably, the average of an MD tensile strength and a TD tensile strength of the biaxially stretched film may be 155 MPa or more, or 160 MPa or more, or 165 MPa or more, 168 MPa or more, or 170 MPa or more, while also being 200 MPa or less, or 185 MPa or less, or 180 MPa or less, or 175 MPa or less.

Also, the polyethylene biaxially stretched film may have a tensile modulus in the MD direction of 500 MPa or more, as measured according to ASTM D 882 standard. The a tensile modulus in the MD direction may be520 MPa or more, or 530 MPa or more, or 535 MPa or more, or 550 MPa or more, or 600 MPa or more, or 645 MPa or more, and also may be 1000 MPa or less, or 950 MPa or less, or 900 MPa or less, or 850 MPa or less, or 810 MPa or less. The polyethylene biaxially stretched film may have a tensile modulus in the TD direction of 600 MPa or more, as measured according to ASTM D 882 standard. The a tensile modulus in the TD direction may be 620 MPa or more, or 650 MPa or more, or 680 MPa or more, or 690 MPa or more, or 700 MPa or more, or 800 MPa or more, or 850 MPa or more, and also may be 1500 MPa or less, or 1200 MPa or less, or 1000 MPa or less, or 980 MPa or less.

The average of an MD tensile modulus and a TD tensile modulus of the biaxially stretched film, as measured according to ASTM D 882 standard, may be 600 MPa or more. Preferably, the average of an MD tensile modulus and a TD tensile modulus of the biaxially stretched film may be 605 MPa or more, or 610 MPa or more, or 613 MPa or more, while also being 1000 MPa or less, or 950 MPa or less, or 920 MPa or less, or 900 MPa or less, or 895 MPa or less.

The polyethylene biaxially stretched film, may have an MD elongation at break from 150% to 250%, or from 160% to 230%, or from 170% to 180%, and an TD elongation at break from 30% to 100%, or from 35% to 80%, or from 38% to 60%, as measured according to ASTM D 882 standard.

In addition, the polyethylene biaxially stretched film may have a tear strength, measured in accordance with ASTM 1922 standard, in the MD of from 6 N/mm to 13.1 N/mm and in the TD of from 1.6 N/mm to 6.7 N/mm.

The polyethylene biaxially stretched film may have a puncture strength, measured in accordance with EN 14477 standard, of 400 N/mm or more; preferably, 420 N/mm, 430 N/mm or more, 435 N/mm or more, 440 N/mm or more, or 445 N/mm or more, while also being 600 N/mm or less, 550 N/mm or less, 500 N/mm or less, 520 N/mm or less, 500 N/mm or less, or 485 N/mm or less.

Furthermore, the polyethylene biaxially stretched film may have a dart drop impact strength (face) measured by Dart drop method A in accordance with ASTM D 1709 standard of 490 g or more; preferably, 495 g or more, 498 g or more, 500 g or more, or 530 g or more, while also being 700 g or less, or 650 g or less, or 620 g or less, or 600 g or less, or 580 g or less, or 550 g or less, or 540 g or less.

In the present disclosure, the physical properties of the biaxially stretched film may be measured according to the above described standards, and specific procedures are described in Test Example 3 below.

Thus, as described above, by blending the first ethylene-alpha olefin copolymer, which exhibihs excellent mechanical properties, with the second ethylene-alpha olefin copolymer, which provide excellent flowability and stretchability, it is possible to control the balance between mechanical properties and elongation, thereby stably producing a biaxially stretched film that possesses high shrink resistance, printability, and transparency, while maintaining excellent mechanical properties, productivity, and stretching stability.

### [ADVANTAGEOUS EFFECTS]

The polyethylene according to the present disclosure has an excellent effect of manufacturing a biaxially stretched film having high shrinkage resistance, printability and transparency, with outstanding film processability and productivity, while maintaining excellent mechanical properties, and stretching stability.

### [DETAILED DESCRIPTION OF THE EMBODIMENTS]

Hereinafter, embodiments of the present invention will be described in more detail in the following examples. However, the following examples are for illustrative purposes only and are not intended to limit the present invention.

### [Examples]

### <Preparation of metallocene compound>

### Synthesis Example 1

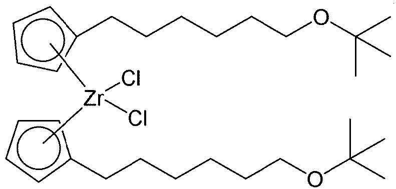

t-butyl-O-(CH₂)₆-Cl was prepared by the method shown in Tetrahedron Lett. 2951 (1988) using 6-chlorohexanol, and reacted with Na(C₅H₅) [NaCp] to obtain t-butyl-O-(CH₂)₆-C₅H₅ (yield 60%, b.p. 80 °C/0.1 mmHg).

In addition, t-butyl-O-(CH₂)₆-C₅H₅ was dissolved in tetrahydrofuran (THF) at -78 °C, and n- butyl lithium (n-BuLi) was slowly added thereto. Thereafter, it was heated to room temperature and reacted for 8 hours. The lithium salt solution synthesized as described above was slowly added to a suspension solution of ZrCl₄(THF)₂ (170 g, 4.50 mmol)/THF(30 mL) at -78 °C, and further reacted for about 6 hours at room temperature. All volatiles were dried under vacuum and the resulting oily liquid material was filtered by adding a hexane solvent. The filtered solution was dried under vacuum, and hexane was added to obtain a precipitate at a low temperature (-20 °C). The obtained precipitate was filtered at a low temperature to obtain [t-butyl-O-(CH₂)₆-C₅H₄]₂ZrCl₂ compound in the form of a white solid (yield 92%).

¹H-NMR (300 MHz, CDCl₃): δ 6.28(t, J=2.6 Hz, 2H), 6.19(t, J=2.6 Hz, 2H), 3.31(t, 6.6 Hz, 2H), 2.62(t, J=8 Hz), 1.7 - 1.3(m, 8H), 1.17(s, 9H).

¹³C-NMR (CDCl₃): δ 135.09, 116.66, 112.28, 72.42, 61.52, 30.66, 30.31, 30.14, 29.18, 27.58, 26.00.

### Synthesis Example 2

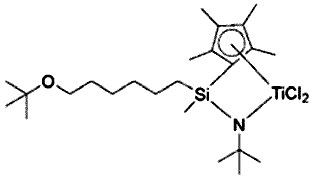

50 g of Mg(s) was added to a 10 L reactor at room temperature, followed by 300 mL of THF. 0.5 g of I₂ was added, and the reactor temperature was maintained at 50 °C. After the reactor temperature was stabilized, 250 g of 6-t-butoxyhexyl chloride was added to the reactor at a rate of 5 mL/min using a feeding pump. It was observed that the reactor temperature rose by 4 to 5 °C with the addition of 6-t-butoxyhexylchloride. It was stirred for 12 hours while continuously adding 6-t-butoxyhexylchloride. After reaction for 12 hours, a black reaction solution was obtained. 2 mL of the black solution was taken, and water was added thereto to obtain an organic layer. The organic layer was confirmed to be 6-t-butoxyhexane through ¹H-NMR. From this, it was confirmed that Grignard reaction was well performed. Thus, 6-t-butoxyhexyl magnesium chloride was synthesized.

500 g of trichloromethylsilane (MeSiCl₃) and 1 L of THF were added to a reactor, and then the reactor temperature was cooled down to -20 °C. 560 g of the 6-t-butoxyhexyl magnesium chloride synthesized above was added to the reactor at a rate of 5 mL/min using a feeding pump. After completion of the feeding of Grignard reagent, the mixture was stirred for 12 hours while slowly raising the reactor temperature to room temperature. After reaction for 12 hours, it was confirmed that white MgCl₂ salt was produced. 4 L of hexane was added thereto and the salt was removed through a labdori to obtain a filtered solution. After the filtered solution was added to the reactor, hexane was removed at 70 °C to obtain a pale yellow liquid. The obtained liquid was confirmed to be methyl(6-t-butoxy hexyl)dichlorosilane through ¹H-NMR.

¹H-NMR(300 MHz, CDCl₃): δ 3.3(t, 2H), 1.5(m, 3H), 1.3(m, 5H), 1.2(s, 9H), 1.1(m, 2H), 0.7(s, 3H).

1.2 mol (150 g) of tetramethylcyclopentadiene and 2.4 L of THF were added to the reactor, and then the reactor temperature was cooled down to -20 °C. 480 mL of n-BuLi was added to the reactor at a rate of 5 ml/min using a feeding pump. After n-BuLi was added, the mixture was stirred for 12 hours while slowly raising the reactor temperature to room temperature. After reaction for 12 hours, an equivalent of methyl(6-t-butoxy hexyl)dichlorosilane (326 g, 350 mL) was rapidly added to the reactor. The mixture was stirred for 12 hours while slowly raising the reactor temperature to room temperature. Then, the reactor temperature was cooled to 0 °C again, and 2 equivalents of t-BuNH₂ was added. The mixture was stirred for 12 hours while slowly raising the reactor temperature to room temperature. After reaction for 12 hours, THF was removed. Thereafter, 4 L of hexane was added and the salt was removed through a labdori to obtain a filtered solution. The filtered solution was added to the reactor again, and hexane was removed at 70 °C to obtain a yellow solution. The yellow solution obtained above was confirmed to be methyl(6-t-butoxyhexyl)(tetramethylCpH)t-butylaminosilane through ¹H-NMR.

A dilithium salt of the ligand prepared above was prepared from n-BuLi and the ligand prepared above in THF solution at -78°C, and TiCl₃(THF)₃ (10 mmol) was rapidly added thereto. While slowly heating the reaction solution from -78 °C to room temperature, it was stirred for 12 hours. After stirring for 12 hours, an equivalent of PbCl₂ (10 mmol) was added to the reaction solution at room temperature, and then stirred for 12 hours. After stirring for 12 hours, a dark black solution with a blue tinge was obtained. THF was removed from the resulting reaction solution, and then hexane was added to filter the product. Hexane was removed from the filtered solution, and then the product was confirmed to be (tBu-O-(CH₂)₆)(CH₃)Si(C₅(CH₃)₄)(tBu-N)TiCl₂, ([methyl(6-t-buthoxyhexyl)silyl(η5-tetramethylCp)(t-Butylamino)]TiCl₂), through ¹H-NMR.

¹H-NMR (300 MHz, CDCl₃): δ 3.3(s, 4H), 2.2(s, 6H), 2.1(s, 6H), 1.8 - 0.8(m), 1.4(s, 9H), 1.2(s, 9H), 0.7(s, 3H).

### Synthesis Example 3

### (1) Preparation of ligand A

A 1-benzothiophene solution was prepared by dissolving 4.0 g (30 mmol) of 1-benzothiophene in THF. Then, 14 mL (36 mmol, 2.5 M in hexane) of an n-BuLi solution and 1.3 g (15 mmol) of CuCN were added to the 1-benzothiophene solution. Then, 3.6 g (30 mmol) of tigloyl chloride was slowly added to the above solution at - 80 °C, and the resulting solution was stirred at room temperature for about 10 hours. Thereafter, 10% HCl was poured into the above solution to quench the reaction, and the organic layer was separated with dichloromethane to obtain (2E)-1-(1-benzothien-2-yl)-2-methyl-2-buten-1-one in the form of a beige solid.

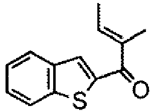

¹H NMR(CDCl₃): δ 7.85-7.82(m, 2H), 7.75(m, 1H), 7.44-7.34(m, 2H), 6.68(m, 1H), 1.99(m, 3H), 1.92(m, 3H).

34 mL of sulfuric acid was slowly added to the solution in which 5.0 g (22 mmol) of (2E)-1-(1-benzothien-2-yl)-2-methyl-2-buten-1-one prepared above was dissolved in 5 mL of chlorobenzene while vigorous stirring. Then, the solution was stirred at room temperature for about 1 hour. Thereafter, ice water was poured into the solution, the organic layer was separated with an ether solvent, and 4.5 g of 1,2-dimethyl-1,2-dihydro-3H-benzo[b]cyclopenta[d]thiophen-3-one was obtained in the form of a yellow solid (91% yield).

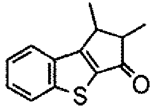

¹H NMR(CDCl₃): δ 7.95-7.91(m, 2H), 7.51-7.45(m, 2H), 3.20(m, 1H), 2.63(m, 1H), 1.59(d, 3H), 1.39(d, 3H).

570 mg (15 mmol) of NaBH₄ was added to the solution in which 2.0 g (9.2 mmol) of 1,2-dimethyl-1,2-dihydro-3H-benzo[b]cyclopenta[d]thiophen-3-one was dissolved in a mixed solvent of 20 mL of THF and 10 mL of methanol at 0 °C. Then, the solution was stirred at room temperature for about 2 hours. Thereafter, HCl was added to the solution to adjust the pH to 1, and the organic layer was separated with an ether solvent to obtain an alcohol intermediate.

A solution was prepared by dissolving the alcohol intermediate in toluene. Then, 190 mg (1.0 mmol) of p-toluenesulfonic acid was added to the solution, and refluxed for about 10 minutes. The obtained reaction mixture was separated by column chromatography to obtain 1.8 g (9.0 mmol, 98% yield) of 1,2-dimethyl-3H-benzo[b] cyclopenta[d]thiophene (ligand A) in the form of an orange-brown liquid.

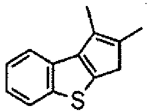

¹H NMR(CDCl₃): δ 7.81(d, 1H), 7.70(d, 1H), 7.33(t, 1H), 7.19(t, 1H), 6.46(s, 1H), 3.35(q, 1H), 2.14(s, 3H), 1.14(d, 3H).

### (2) Preparation of ligand B

13 mL (120 mmol) of t-butylamine and 20 mL of an ether solvent were added to a 250 mL schlenk flask, and 16 g (60 mmol) of (6-tert-butoxyhexyl)dichloro(methyl)silane and 40 mL of an ether solvent were added to another 250 mL schlenk flask to prepare a t-butylamine solution and a (6-tert-butoxyhexyl)dichloro(methyl)silane solution, respectively. Then, the t-butylamine solution was cooled to -78 °C, and the (6-tert-butoxyhexyl)dichloro(methyl)silane solution was slowly injected into the cooled solution, followed by stirring at room temperature for about 2 hours. The resulting white suspension was filtered to obtain 1-(6-(tert-butoxy)hexyl)-N-(tert-butyl)-1-chloro-1-methylsilaneamine (ligand B) in the form of an ivory liquid.

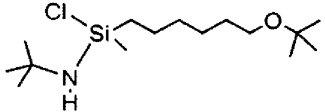

¹H NMR(CDCl₃): δ 3.29(t, 2H), 1.52-1.29(m, 10H), 1.20(s, 9H), 1.16(s, 9H), 0.40(s, 3H).

### (3) Cross-linking of ligands A and B

1.7 g (8.6 mmol) of 1,2-dimethyl-3H-benzo[b]cyclopenta[d]thiophene (ligand A) was added in a 250 mL schlenk flask, followed by adding 30 mL of THF to prepare a ligand A solution. After the ligand A solution was cooled to -78 °C, 3.6 mL (9.1 mmol, 2.5 M in hexane) of an n-BuLi solution was added to the ligand A solution. Then, the mixture was stirred at room temperature overnight to obtain a purple-brown solution. The solvent of the purple-brown solution was replaced with toluene and a solution in which 39 mg (0.43 mmol) of CuCN was dispersed in 2 mL of THF was injected thereto to prepare a solution A.

Meanwhile, a solution B prepared by injecting 1-(6-(tert-butoxy)hexyl)-N-(tert-butyl)-1-chloro-1-methylsilaneamine (ligand B) and toluene into a 250 mL schlenk flask was cooled to -78 °C. The solution A prepared above was slowly injected into the cooled solution B. Then, the mixture of solutions A and B was stirred at room temperature overnight. Thereafter, the resulting solid was removed by filtration to obtain 4.2 g (>99% yield) of 1-(6-(tert-butoxy)hexyl)-N-(tert-butyl)-1-(1,2-dimethyl-3H-benzo[b]cyclopenta[d]thiophen-3-yl)-1-methylsilaneamine (cross-linked product of ligands A and B) in the form of a brown viscous liquid.

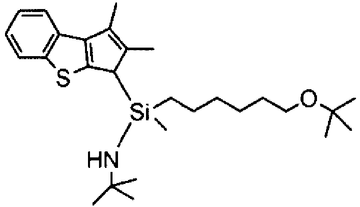

In order to confirm the structure of the cross-linked product of ligands A and B, the cross-linked product was lithiated at room temperature, and then an ¹H-NMR spectrum was obtained using a sample dissolved in a small amount of pyridine-D5 and CDCl₃.

¹H NMR(pyridine-D5 and CDCl₃): δ 7.81(d, 1H), 7.67(d, 1H), 7.82-7.08(m, 2H), 3.59(t, 2H), 3.15(s, 6H), 2.23-1.73(m, 10H), 2.15(s, 9H), 1.91(s, 9H), 1.68(s, 3H).

### (4) Preparation of transition metal compound

4.2 g (8.6 mmol) of 1-(6-(tert-butoxy)hexyl)-N-(tert-butyl)-1-(1,2-dimethyl-3H-benzo[b]cyclopenta[d]thiophene-3-yl)-1-methylsilaneamine (cross-linked product of ligands A and B) was added in a 250 mL schlenk flask, and 14 mL of toluene and 1.7 mL of n-hexane were added to the flask to dissolve the cross-linked product. The solution was cooled to -78 °C, and then 7.3 mL (18 mmol, 2.5 M in hexane) of an n-BuLi solution was injected into the cooled solution. Thereafter, the solution was stirred at room temperature for about 12 hours. Then, 5.3 mL (38 mmol) of trimethylamine was added to the solution, followed by stirring at about 40 °C for about 3 hours to prepare a solution C.

Meanwhile, 2.3 g (8.6 mmol) of TiCl₄(THF)₂ and 10 mL of toluene were added to a separately prepared 250 mL schlenk flask to prepare a solution D in which TiCl₄(THF)₂ was dispersed in toluene. The solution C prepared before the solution D was slowly injected at -78 °C, and the mixture of solutions C and D was stirred at room temperature for about 12 hours. Thereafter, the solution was depressurized to remove the solvent, and the resulting solute was dissolved in toluene. Then, the solid not dissolved in toluene was removed by filtration, and the solvent was removed from the filtered solution to obtain 4.2 g (83% yield) of a transition metal compound in the form of a brown solid.

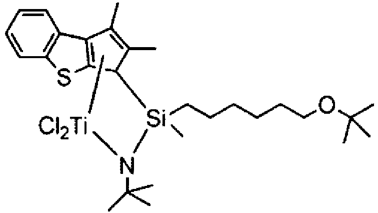

¹H NMR(CDCl₃): δ 8.01(d, 1H), 7.73(d, 1H), 7.45-7.40(m, 2H), 3.33(t, 2H), 2.71(s, 3H), 2.33(d, 3H), 1.38(s, 9H), 1.18(s, 9H), 1.80-0.79(m, 10H), 0.79(d, 3H).

### Synthesis Example 4

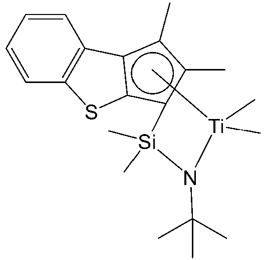

### (1) Preparation of ligand compound: Synthesis of N-tert-butyl-1-(1,2-dimethyl-3H-benzo[b]cyclopenta[d]thiophen-3-yl)-1,1-dimethylsilanamine

4.65 g (15.88 mmol) of the compound of Chemical Formula 3 was added to a 100 mL Schlenk flask, and then 80 mL of THF was added thereto. After adding tBuNH₂ (4eq, 6.68 mL) at room temperature, the mixture was reacted at room temperature for 3 days. After the reaction, THF was removed, and the mixture was filtered with hexane. After drying the solvent, 4.50 g (yield: 86%) of a yellow liquid was obtained.

¹H-NMR (500 MHz, CDCl₃): δ 7.99(d, 1H), 7.83(d, 1H), 7.35(dd, 1H), 7.24(dd, 1H), 3.49(s, 1H), 2.37(s, 3H), 2.17(s, 3H), 1.27(s, 9H), 0.19(s, 3H), -0.17(s, 3H).

### (2) Preparation of transition metal compound

The ligand compound (1.06 g, 3.22 mmol/1.0eq) and MTBE 16.0 mL (0.2 M) were added to a 50 mL schlenk flask and stirred first. At -40 °C, n-BuLi (2.64 mL, 6.60 mmol/2.05eq, 2.5M in THF) was added, and reacted overnight at room temperature. Thereafter, MeMgBr (2.68 mL, 8.05 mmol/2.5eq, 3.0M in diethyl ether) was slowly added dropwise at -40 °C, and then TiCl₄(2.68 mL, 3.22 mmol/1.0eq, 1.0M in toluene) was added thereto at room temperature, followed by reacting overnight. The reaction mixture was then filtered through celite using hexane. After drying the solvent, 1.07 g (yield: 82%) of a brown solid was obtained.

¹H-NMR (500 MHz, CDCl₃): δ 7.99(d, 1H), 7.68(d, 1H), 7.40(dd, 1H), 7.30(dd, 1H), 3.22(s, 1H), 2.67(s, 3H), 2.05(s, 3H), 1.54(s, 9H), 0.58(s, 3H), 0.57(s, 3H), 0.40(s, 3H), -0.45(s, 3H).

### <Preparation of supported catalyst>

### Catalyst Preparation Example 1: Preparation of hybrid supported metallocene catalyst 1

3.0 kg of a toluene solution was added to a 20 L stainless steel (SUS) highpressure reactor, and the reactor temperature was maintained at 40 °C. 500 g of silica (manufactured by Grace Davison, SP2212) dehydrated by applying vacuum at a temperature of 600 °C for 12 hours was added to the reactor and sufficiently dispersed, and then 2.78 kg of 10 wt% methylaluminoxane (MAO)/toluene solution was added thereto, followed by stirring at 200 rpm at 80 °C for 15 hours to react.

After lowering the temperature of the reactor to 40 °C, 200 g of the first metallocene compound/toluene solution (7.8 wt% in toluene) prepared in Synthesis Example 1 was added to the reactor and stirred at 200 rpm for 1 hour. Subsequently, 250 g of the second metallocene compound (b)/toluene solution (7.8 wt% in toluene) prepared in Synthesis Example 3 was added to the reactor and stirred at 200 rpm for 1 hour (molar ratio of first metallocene compound: second metallocene compound=1: 1.3).

70 g of a cocatalyst (anilinium tetrakis(pentafluorophenyl)borate) was diluted in toluene, and then added to the reactor, followed by stirring at 200 rpm for 15 hours or more. After lowering the temperature of the reactor to room temperature, stirring was stopped, settling was performed for 30 minutes, and the reaction solution was decanted.

The toluene slurry was transferred to a filter dryer and filtered. After adding 3.0 kg of toluene and stirring for 10 minutes, stirring was stopped and filtration was performed. 3.0 kg of hexane was added to the reactor and stirred for 10 minutes, then stirring was stopped and filtration was performed. It was dried under reduced pressure at 50 °C for 4 hours to prepare a 500 g-SiO₂ hybrid supported catalyst 1.

### Catalyst Preparation Example 2: Preparation of hybrid supported metallocene catalyst 2

5.0 kg of a toluene solution was added to a 20 L stainless steel (SUS) highpressure reactor, and the reactor temperature was maintained at 40 °C. 1000 g of silica (manufactured by Grace Davison, SYLOPOL 948) dehydrated by applying vacuum at a temperature of 600 °C for 12 hours was added to the reactor and sufficiently dispersed, and then 80 g of the first metallocene compound of Synthesis Example 1 was dissolved in toluene and added thereto, followed by stirring at 200 rpm at 40 °C for 2 hours to react. Thereafter, stirring was stopped, settling was performed for 30 minutes, and the reaction solution was decanted.

2.5 kg of toluene was added to the reactor, and 9.4 kg of a 10 wt% methylaluminoxane (MAO)/toluene solution was added thereto, followed by stirring at 200 rpm at 40 °C for 12 hours. After the reaction, stirring was stopped, settling was performed for 30 minutes, and the reaction solution was decanted. After adding 3.0 kg of toluene and stirring for 10 minutes, stirring was stopped and settling was performed for 30 minutes, and the toluene solution was decanted.

3.0 kg of toluene was added to the reactor, and then 314 mL of the 29.2 wt% second metallocene compound of Synthesis Example 2/toluene solution was added to the reactor, followed by stirring at 200 rpm at 40 °C for 2 hours to react. At this time, the molar ratio of the first metallocene compound and the second metallocene compound was 1:5. After the reactor temperature was lowered to room temperature, stirring was stopped, settling was performed for 30 minutes, and the reaction solution was decanted.

After adding 2.0 kg of toluene and stirring for 10 minutes, stirring was stopped and settling was performed for 30 minutes, and the reaction solution was decanted.

3.0 kg of hexane was added to the reactor, the hexane slurry was transferred to a filter dryer, and the hexane solution was filtered. It was dried under reduced pressure at 40 °C for 4 hours to prepare 910g-SiO₂ hybrid supported catalyst 2.

### <Preparation of ethylene-alpha olefin copolymer>

### Preparation Example 1: Preparation of ethylene/1-hexene copolymer (PE-a)

An ethylene/1-hexene copolymer (PE-a) was slurry polymerized by a monomodal polymerization process, in the presence of the supported hybrid catalyst 1 prepared in Catalyst Preparation Example 1.

Specifically, an ethylene/1-hexene copolymer (PE-a) was obtained using the hybrid supported metallocene catalyst 1 prepared in Catalyst Preparation Example 1 in one loop-type reactor (polymerization temperature: 93 °C, polymerization pressure: 7.7 kgf/cm²) with a hexane slurry stirred tank process polymerization reactor under the conditions of 10.0 kg/hr of ethylene input, 6.3 ml/min of 1-hexene input as a comonomer, and 1.80 g/hr of hydrogen input.

The catalytic activity was obtained by measuring the weight of the catalyst used in the polymerization reaction and the weight of the polymer prepared from the polymerization reaction, and then calculating a weight ratio of the weight of the prepared polymer to the weight of the used catalyst, and confirmed to be 9.9 kgPE/gCat.hr.

### Preparation Example 2: Preparation of ethylene/1-hexene copolymer (PE-b)

An ethylene/1-hexene copolymer (PE-b) was produced in the same manner as in Preparation Example 1 except that the slurry polymerization of the ethylene/1-hexene copolymer was carried out with the 1-hexene feed adjusted to 6.2 mL/min and the hydrogen feed adjusted to 1.90 g/hr.

### Preparation Example 3: Preparation of ethylene/1-hexene copolymer (PE-c)

An ethylene/1-hexene copolymer (PE-c) was produced in the same manner as in Preparation Example 1 except that the slurry polymerization of the ethylene/1-hexene copolymer was carried out with the hydrogen feed adjusted to 1.73 g/hr.

### Preparation Example 4: Preparation of ethylene/1-hexene copolymer (PE-d)

An ethylene/1-hexene copolymer (PE-d) was slurry polymerized in the presence of the supported hybrid catalyst 2 prepared in Catalyst Preparation Example 2.

At this time, the polymerization reactor was an isobutane (i-C4) slurry loop process, a continuous polymerization reactor, and a reactor volume was 140 L with a flow rate of about 7 m/s. Gases (ethylene, hydrogen) required for polymerization and 1-hexene, a comonomer, were constantly and continuously introduced, and the flow rates were adjusted according to target products. At this time, the ethylene input was 31.1 kg/hr, the 1-hexene input was adjusted to 4.3 wt% compared to ethylene, and the hydrogen input was adjusted to 95 ppm compared to ethylene. In addition, the concentrations of all gases and 1-hexene comonomer in Preparation Example 2 were confirmed by on-line gas chromatograph. The supported catalyst was prepared and introduced as an isobutane slurry having a concentration of 4 wt%, the reactor pressure was maintained at about 40 bar, and the polymerization temperature was about 80 °C.

### Preparation Example 5: Preparation of ethylene/1-hexene copolymer (PE-e)

An ethylene/1-hexene copolymer (PE-e) was produced in the same manner as in Preparation Example 4 except that the slurry polymerization of the ethylene/1-hexene copolymer was carried out with the 1-hexene feed adjusted to 4.5 wt% relative to ethylene and the hydrogen feed adjusted to 100 ppm relative to ethylene.

### Preparation Example 6: Preparation of ethylene/1-hexene copolymer (PE-f)

An ethylene/1-hexene copolymer (PE-f) was produced in the same manner as in Preparation Example 3 except that the slurry polymerization of the ethylene/1-hexene copolymer was carried out with the 1-hexene feed adjusted to 2.5 wt% relative to ethylene and the hydrogen feed adjusted to 56 ppm relative to ethylene.

### Preparation Example 7: Preparation of ethylene/1-octene copolymer (PE-g)

A continuous process reactor (1.5 L) was preheated at 120 °C while adding 5 kg/h of a hexane solvent and 0.31 kg/h of 1-octene. Triisobutylaluminum (Tibal, 0.045 mmol/min), the transition metal compound obtained in Synthesis Example 4, and dimethylanilinium tetrakis(pentafluorophenyl)borate cocatalyst (2.6 µmol/min) were simultaneously added to the reactor. Subsequently, ethylene (0.87 kg/hr) and hydrogen gas (10 cc/min) were introduced into the reactor and maintained at 160.0 °C for more than 60 minutes in a continuous process at a pressure of 89 bar to carry out a copolymerization reaction to obtain an ethylene/1-octene copolymer (PE-g).

### <Test Example 1: Evaluation of physical properties of polyethylene>

The physical properties of the ethylene-alpha olefin copolymers prepared in Preparation Examples 1 to 7 were measured by the method described below and are shown in Table 1.

### (1) Density

The density (g/cm³) was measured using a density gradient column according to ASTM D 1505 (American Society for Testing and Materials) standard.

### (2) Melt index

The melt index (MI_{2.16}) was measured under a load of 2.16 kg at 190 °C according to ASTM D 1238 (Condition E, 190 °C, 2.16 kg) standard of the American Society for Testing and Materials (measurement equipment: MI-4 manufactured by Gottfert), and expressed as the weight (g) of the polymer melted for 10 minutes.

### (3) Number average molecular weight (Mn), weight average molecular weight (Mw), and molecular weight distribution (Mw/Mn)

Regarding the ethylene-alpha olefin copolymers prepared in Preparation Examples 1 to 7, the molecular weight distribution (Mw/Mn, PDI, polydispersity index) was calculated by measuring a weight average molecular weight (Mw, g/mol) and a number average molecular weight (Mn, g/mol) using gel permeation chromatography (GPC, manufactured by Water) according to ASTM D 6474 (American Society for Testing and Materials) standard, and then dividing the weight average molecular weight by the number average molecular weight.

Specifically, PL-GPC220 manufactured by Waters was used as the gel permeation chromatography (GPC) instrument, and a Polymer Laboratories PLgel MIX-B 300 mm length column was used. An evaluation temperature was 160 °C, and 1,2,4-trichlorobenzene was used for a solvent at a flow rate of 1 mL/min. Each ethylene-alpha olefin copolymer sample prepared in Preparation Examples 1 to 7 was pretreated by dissolving in 1,2,4-trichlorobenzene containing 0.0125% of BHT at 160 °C for 3 hours using a GPC analyzer (PL-GP220), and the sample with a concentration of 32 mg/10 mL was supplied in an amount of 200 µL. Mw and Mn were obtained using a calibration curve formed using a polystyrene standard. 9 kinds of the polystyrene standard were used with the molecular weight of 2000 g/mol, 10000 g/mol, 30000 g/mol, 70000 g/mol, 200000 g/mol, 700000 g/mol, 2000000 g/mol, 4000000 g/mol, and 10000000 g/mol.

**[Table 1]**

| | Catalyst | Polymerization Process | Comonomer | Density (g/cm³) | MI_{2.16} (g/10min) | Mn (g/mol) | Mw (g/mol) | Mw/Mn |
|---|---|---|---|---|---|---|---|---|
| Prep. Ex. 1 (PE-a) | Metallocene | Slurry | 1-hexene | 0.946 | 0.33 | 16000 | 137000 | 8.6 |
| Prep. Ex. 2 (PE-b) | Metallocene | Slurry | 1-hexene | 0.948 | 0.39 | 18000 | 163000 | 9.1 |
| Prep. Ex. 3 (PE-c) | Metallocene | Slurry | 1-hexene | 0.948 | 0.17 | 15000 | 200000 | 13.1 |
| Prep. Ex. 4 (PE-d) | Metallocene | Slurry | 1-hexene | 0.934 | 1.56 | 24000 | 96000 | 4.0 |
| Prep. Ex. 5 (PE-e) | Metallocene | Slurry | 1-hexene | 0.932 | 1.66 | 24000 | 94000 | 4.0 |
| Prep. Ex. 6 (PE-f) | Metallocene | Slurry | 1-hexene | 0.941 | 0.6 | 28000 | 114000 | 4.1 |
| Prep. Ex. 7 (PE-g) | Metallocene | Solution | 1-octene | 0.900 | 6.08 | 30000 | 68000 | 2.3 |

### <Preparation of polyethylene composition>

### Examples 1 to 2 and Comparative Examples 1 to 6

Polyethylene compositions of Examples 1 to 2 and Comparative Examples 1 to 6 were prepared using the above-described ethylene-alpha olefin copolymers of Preparation Examples 1 to 7, respectively, with the compositions shown in Table 2 below.

Specifically, a polyethylene composition was prepared by extruding and granulating with a hopper of 18 rpm and a screw of 350 rpm at 220 °C using a twin extruder (extruder: TEK30MHS from SMPLATEK, L/D ratio: 40, die diameter: 4 mm).

### <Test Example 2: Evaluation of physical properties of polyethylene composition>

Physical properties of the polyethylene compositions prepared in Examples 1 to 2 and Comparative Examples 1 to 6 were measured by the method described below and are shown in Table 2 below.

First, the melt index (MI_{2.16}, MI_{21.6}, and MFRR = MI_{21.6}/MI_{2.16}),, density, weight average molecular weight (Mw, g/mol), number average molecular weight (Mn, g/mol) and molecular weight distribution (Mw/Mn, PDI) of the polyethylene compositions were measured in the same manner as in Test Example 1 above.

### (4) Melting temperature, crystallization temperature, and crystallinity

The melting temperature (Tm), crystallization temperature (Tc) and crystallinity (Xc) of the polyethylene compositions according to Examples 1 and 2 and Comparative Examples 1 to 6 were measured using a differential scanning calorimeter (DSC, device name: DSC Q20, manufacturer: TA instrument).

Specifically, the polyethylene composition was heated to 180 °C at 10 °C/min (Cycle 1), isothermal at 180 °C for 5 minutes, cooled to 0 °C at 10 °C/min, isothermal at 30 °C for 5 minutes, and then heated again to 180 °C at 10 °C/min (Cycle 2). In the DSC curve obtained above, the temperature at the maximum point of the endothermic peak was measured as the melting temperature (Tm, °C), and the temperature at the maximum point of the exothermic peak was measured as the crystallization temperature (Tc, °C). At this time, the melting temperature (Tm) and the crystallization temperature (Tc) were shown as the results measured in Cycle 2 in which the second temperature rises and falls.

In addition, the heat of fusion ΔHm was obtained by calculating the area of the melting peak in Cycle 2 in which the second temperature rises, and the crystallinity (Xc, %) was calculated by dividing ΔHm by H⁰m = 293.6 J/g, which is the theoretical value when the crystallinity is 100%.

### (5) Cross fractionation chromatography (CFC)

A cross fractionation chromatography (CFC) was performed on the polyethylene compositions of Examples 1 to 2 and Comparative Examples 1 to 6 in the following manner. This analysis measured the content ratio (weight percentage wt%, T≥90°C) and weight average molecular weight (Mw, g/mol, T≥90°C) of the high crystalline fraction eluted at a temperature of 90 °C or more, the main chain weight average molecular weight (Mwₘₐᵢₙ, T≥90°C) of the high crystalline fraction; the content ratio (weight percentage wt%, T<90°C) and weight average molecular weight (Mw, g/mol, T<90°C) of the medium- to low crystalline fraction eluted below 90 °C; the content ratio (weight percentage wt%, T≥70°C,<90°C) and weight average molecular weight (Mw, g/mol, T≥70°C, <90°C) of the medium crystalline fraction eluted between 70 °C or more and below 90 °C; the content ratio (weight percentage, T≥35°C, <70°C) and weight average molecular weight (Mw, g/mol, T≥35°C,<70°C) of the low crystalline fraction eluted between 35 °C or more and below 70 °C; and the content ratio (weight percentage, T<35°C) and weight average molecular weight (Mw, g/mol, T<35°C) of the soluble fraction (Soluble Fraction, S.F.) eluted below 35 °C.

### Cross fractionation chromatography (CFC) measurement conditions (including TREF and GPC-IR analysis)

- Analysis equipment: Polymer Char CFC (Detector: Integrated Detector IR5 MCT)
- Sample preparation and injection: 32 mg of the polyethylene composition was added to a 10 mL vial, and placed in an autosampler. Then, 8 mL of 1,2,4-trichlorobenzene (TCB) was added, dissolved at 160 °C for 90 minutes, and extracted after nitrogen purge, followed by loading on a temperature rising elution fractionation column (TREF column).
- Crystallization: After adjusting the temperature of the sample previously loaded on the TREF column to 100 °C, cooling was performed from 100 °C to 35 °C at 0.5 °C/min.
- Temperature rising elution fractionation (TREF) analysis: The previously crystallized sample was heated at 3 °C intervals from 35 °C to 125 °C, and fixed. Then, the fractions eluted at each temperature for 25 minutes were analyzed. Specifically, it was extracted at 35 °C for 25 minutes and analyzed, then extracted and analyzed after raising the temperature at 3 °C intervals, and finally extracted at 125 °C for 25 minutes and analyzed.
- GPC-IR Analysis: Fractions eluted at various temperatures during the TREF analysis are transferred to the GPC (PL-GPC220) column. The molecular weights of the eluted molecules are measured, and using the connected PerkinElmer Spectrum 100 FT-IR, the number of short chain branches (scb), defined as branches consisting of 2 to 7 carbon atoms per 1000 carbon atoms (unit: branches/1000 C), is determined.
- Determination of the main chain average molecular weight (Mw_{main, T≥90 °C}): Among fractions eluted at a temperature of 90 °C or more as confirmed by CFC analysis, the weight average molecular weight of the main chain (excluding the short chain branch) (Mw_{main, T≥90°C}, g/mol) was determined according to Equation 1. [Equation 1] ${Mw}_{main , T \geq 90 ° C} \left(g/mol\right) = \frac{{\sum }_{T = 90 ° C} {\sum }_{i} \left({M}_{T , i}-{M}_{scb}∗{n}_{T , i}^{scb}\right) ∗ {C}_{T , i}}{{\sum }_{T = 90 ° C} {\sum }_{i} {C}_{T , i}}$ In Equation 1,
   M_{T,i} and C_{T,i} are the weight average molecular weight (g/mol) and concentration of each fraction eluted at a given temperature as determined by CFC analysis above,
   n^{scb}_{T,i} is the number of side chain branches (scb) of each fraction eluted at a given temperature as determined by CFC analysis above, and
   M_{scb} is the weight average molecular weight (g/mol) of the side chain branches (scb) as determined by CFC analysis.

### (6) Short chain branches (scb) content

The CFC analysis was performed as described above, and after measuring the molecular weight of the eluted molecules, the number of short chain branches (scb), specifically the branch content ranging from 2 to 7 branches per 1000 carbon atoms, was determined in the molecular weight region of 200000 g/mol or more and 500000 g/mol or less, i.e., in the Mw range of 10^{5.3} to 10^{5.7} or the Log MW range of 5.3 to 5.7.

**[Table 2]**

| | Example 1 | Example 2 | Comparative Example 1 | Comparative Example 2 | Comparative Example 3 | Comparative Example 4 | Comparative Example 5 | Comparative Example 6 |
|---|---|---|---|---|---|---|---|---|
| Composition | PE-a 70 wt% + PE-g 30 wt% | PE-a 80 wt% + PE-g 20 wt% | PE-b 70 wt% + PE-g 30 wt% | PE-b 80 wt% + PE-g 20 wt% | PE-c 85 wt% + PE-g 15 wt% | PE-d 100 wt% | PE-e 100 wt% | PE-f 85 wt% + PE-g 15 wt% |
| Density (g/cm³) | 0.936 | 0.94 | 0.935 | 0.94 | 0.942 | 0.934 | 0.932 | 0.937 |
| MI_{2.16} (g/10min) | 0.61 | 0.53 | 0.69 | 0.51 | 0.2 | 1.56 | 1.66 | 0.8 |
| MFRR (MI_{21.6} / MI_{2.16} ) | 80.9 | 88.7 | 78.7 | 87.8 | 90.8 | 30.8 | 31.6 | 35.8 |
| Tm(°C) | 127.7 | 127.5 | 127.1 | 127.9 | 128.7 | 125.9 | 125.4 | 128.6 |
| Tc(°C) | 111.7 | 112.3 | 112.4 | 113 | 113.8 | 111 | 110.3 | 114.1 |
| Xc(%) | 60.3 | 67.1 | 62 | 62.8 | 68.2 | 62 | 60.3 | 43.7 |
| Mn (g/mol) | 20000 | 18000 | 17000 | 13000 | 19000 | 24000 | 24000 | 31000 |
| Mw (g/mol) | 115000 | 121000 | 117000 | 123000 | 179000 | 95000 | 94000 | 116000 |
| Mw/Mn | 5.8 | 6.7 | 6.9 | 9.5 | 9.4 | 4 | 3.9 | 3.7 |
| Content of High crystalline fraction (T≥90°C, wt%) | 54.6 | 63 | 57.8 | 65.5 | 79.5 | 58.3 | 55.4 | 64.1 |
| Mw of High crystalline fraction (T≥90°C, g/mol) | 151000 | 147000 | 151000 | 147000 | 183000 | 94000 | 93000 | 111000 |
| Mw of main chain in High crystalline fraction (g/mol, Mwₘₐᵢₙ,_{T≥90°C}) | 142000 | 139000 | 140000 | 138000 | 171000 | 90000 | 89000 | 113700 |
| Content of Medium crystalline fractions (T≥70°C,<90 °C, wt%) | 11.3 | 17.5 | 10.8 | 12.1 | 7.8 | 24.3 | 23.4 | 20.7 |
| Mw of Medium crystalline fractions (T≥70°C,<90 °C, g/mol) | 63000 | 60000 | 37000 | 36000 | 44500 | 58000 | 59000 | 170200 |
| Content of Low crystalline fractions (T≥35°C,<70 °C, wt%) | 25.5 | 15.2 | 28.4 | 19.6 | 11.2 | 8.6 | 11.4 | 13.3 |
| Mw of Low crystalline fractions (T≥35°C,<70 °C, g/mol) | 49000 | 44000 | 44000 | 42000 | 39000 | 30000 | 36000 | 60900 |
| Content of | 45.4 | 37 | 42.2 | 34.5 | 20.5 | 41.7 | 44.6 | 35.9 |
| Medium to Llow crystalline fractions (T<90°C, wt%) | | | | | | | | |
| Content of Soluble Fraction (S.F., T<35°C, wt%) | 2 | 4.2 | 2.9 | 2.8 | 1.5 | 8.8 | 9.8 | 1.9 |
| Content of SCB in Log MW (5.3-5.7) range. (/1000C) | 4.8 | 7.2 | 4.9 | 6.8 | 6.2 | 8.2 | 10.3 | 11.1 |

### <Test Example 3: Preparation of biaxially stretched film and evaluation of physical properties >

After preparing a biaxially stretched film by the following process using the polyethylene compositions prepared in Examples 1 to 2 and Comparative Examples 1 to 6, physical properties thereof were measured and shown in Table 3 below.

### Preparation of biaxially stretched film

- A polyethylene composition sheet (0.75 mm thick) was produced using a lab extruder line (Bruckner; L/D ratio: 42, screw diameter: 25 mm, melt/T-die temperature: 220 °C).
- Using the KARO 5.0 equipment, biaxially stretched a polyethylene composition sheet with dimensions of 90 mm × 90 mm.
- Under the following conditions, after 80 seconds of preheating, sequential drawing was performed (MD followed by TD); for Examples 1 and Comparative Example 1 at 122 °C, for Examples 2 and Comparative Example 2 at 124 °C, and for Example 3, Comparative Example 3, and Comparative Example 4 at 126 °C.

### Evaluation of physical properties of biaxially stretched film

- Haze (%): measured according to ASTM 1003 standard.
- Tensile strength (MPa), Tensile modulus (MPa), and Elongation at break (%): measured in MD/TD directions according to ASTM D 882 standard.
- Tear strength (N/mm): measured in MD/TD directions according to ASTM 1922 standard.
- Shrinkage (%): measured according to ASTM D 1204 standard by observing the change in length after 7 minutes of shrinking at 100 °C, calculated as [(1 - length after shrinking) / length before shrinking] × 100.
- Puncture Strength (N/mm): measured according to EN 14477 standard.
- Drop impact strength (g): measured by the Dart drop method A according to ASTM D 1709 standard, namely, a dart drop impact strength (Face).

**[Table 3]**

| | | Example 1 | Example 2 | Comparative Example 1 | Comparative Example 2 | Comparative Example 3 | Comparative Example 4 | Comparative Example 5 | Comparative Example 6 |
|---|---|---|---|---|---|---|---|---|---|
| Maximum Elongation Ratio (MD*TD) | | 5 X 8 | 5 X 8 | 5 X 8 | 5 X 8 | 5 X 8 | 5 X 8 | 5 X 8 | 5 X 8 |
| Haze(%) | | 1.9 | 5.6 | 3.2 | 4.8 | 4.9 | 5.6 | 2.6 | 6.2 |
| Tensile Strenth | MD | 114 | 80 | 103 | 130 | 125 | 104 | 87 | 97 |
| | TD | 232 | 265 | 186 | 222 | 221 | 242 | 290 | 158 |
| (Mpa) | Average of MD, TD | 173 | 172.5 | 144.5 | 176 | 173 | 173 | 188.5 | 127.5 |
| Tensile Modulus (Mpa) | MD | 537 | 810 | 820 | 947 | 1094 | 637 | 588 | 747 |
| | TD | 690 | 977 | 1208 | 1330 | 1646 | 863 | 997 | 1039 |
| | Average of MD, TD | 613.5 | 893.5 | 1014 | 1138.5 | 1370 | 750 | 792.5 | 893 |
| Elongation (%) | MD | 174 | 171 | 193 | 163 | 177 | 234 | 253 | 195 |
| | TD | 50 | 38 | 52 | 52 | 51 | 52 | 38 | 78 |
| | Average of MD, TD | 112 | 104.5 | 122.5 | 107.5 | 114 | 143 | 145.5 | 136.5 |
| Shrinka ge (@100, %) | MD | 2.7 | 2.3 | 3 | 0 | 2.8 | 3.7 | 3 | 2.0 |
| | TD | 5 | 4 | 4.8 | 3.0 | 4.3 | 2 | 2.7 | 4.7 |
| | MD+ TD | 7.7 | 6.3 | 7.8 | 3.0 | 7.1 | 5.7 | 5.7 | 6.7 |
| Puncture strength (N/mm) | | 445 | 481 | 380 | 410 | 370 | 378 | 393 | 265 |
| Drop impact strength (g) | | 536 | 500 | 415 | 488 | 475 | 410 | 368 | 480 |

The results in Tables 2 and 3 show that the biaxially stretched films produced using the polyethylene compositions of Examples 1 to 2, which have a bimodal molecular structure and increased weight average molecular weight and content of the high crystalline and medium crystalline fractions, exhibit significantly higher tensile strength, puncture strength, and drop impact strength, compared with those of Comparative Examples 1 to 6. This is attributed to the fact that higher weight average molecular weight and molecular content in the high crystalline and medium crystalline fractions are capable of forming a crystalline draw backbone in the polyethylene composition of Examples 1 to 2, thereby facilitating the formation of a draw structure.

Thus, the polyethylene composition of the present disclosure enables the manufacture of a biaxially stretched film with excellent stretching stability and mechanical properties such as tensile strength, puncture strength, and drop impact strength, while also exhibiting a high degree of bimodality. This results in lower viscosity during processing and excellent processability and productivity, which is very advantageous for commercializing single-material packaging films with high shrinkage resistance, printability, and transparency.

## Claims

1. A polyethylene composition comprising at least one ethylene-alpha olefin copolymer, wherein, upon cross fractionation chromatography (CFC) analysis of the polyethylene composition:
a high crystalline fraction eluted at a temperature of 90 °C or more accounts for 50 wt% or more to 80 wt% or less based on the total eluted fraction;
the high crystalline fraction has a weight average molecular weight (Mw) of 140000 g/mol or more to 180000 g/mol or less;
a medium crystalline fraction eluted at a temperature of 70 °C or more and less than 90 °C accounts for 10 wt% or more to 45 wt% or less based on the total eluted fraction; and
the medium crystalline fraction has a weight average molecular weight (Mw) of 50000 g/mol or more to 80000 g/mol or less.

2. The polyethylene composition according to claim 1, wherein, upon cross fractionation chromatography (CFC) analysis of the polyethylene composition:
a low crystalline fraction eluted at a temperature of 35 °C or more and less than 70 °C accounts for 15.2 wt% or more to 25.5 wt% or less based on the total eluted fraction; and
the low crystalline fraction has a weight average molecular weight (Mw) of 44000 g/mol or more to 49000 g/mol or less.

3. The polyethylene composition according to claim 1, wherein, upon cross fractionation chromatography (CFC) analysis of the polyethylene composition,
a soluble fraction (S.F.) eluted at a temperature of less than 35 °C accounts for 2 wt% or more to 6 wt% or less based on the total eluted fraction.

4. The polyethylene composition according to claim 1, wherein, upon cross fractionation chromatography (CFC) analysis of the polyethylene composition,
a short chain branch (scb) content of molecules eluted in a weight average molecular weight (Mw) range of 200000 g/mol to 500000 g/mol is 4 or more per 1000 carbon atoms.

5. The polyethylene composition according to Claim 1,
wherein the polyethylene composition has
a density of 0.925 g/cm³ or more to 0.950 g/cm³ or less, measured in accordance with ASTM D 1505, and
a melt index (MI_{2.16}, at 190 °C under a load of 2.16 kg) of 0.1 g/10 min or more to 1.0 g/10 min or less, measured in accordance with ASTM D 1238.

6. The polyethylene composition according to Claim 1,
wherein the polyethylene composition has
a melt flow rate ratio (MFRR, defined as MI_{21.6}/MI_{2.16}, wherein MI_{21.6} is measured at a temperature of 190 °C under a load of 21.6 kg and MI_{2.16} is measured at a temperature of 190 °C under a load of 2.16 kg) of 70.0 or more, measured in accordance with ASTM D 1238.

7. The polyethylene composition according to Claim 1,
wherein the polyethylene composition has
a number average molecular weight (Mn) of 15000 g/mol or more,
a weight average molecular weight (Mw) of 100000 g/mol or more, and
a molecular weight distribution (Mw/Mn) of 5.0 or more to 11.5 or less.

8. The polyethylene composition according to Claim 1,
wherein the polyethylene composition has
a melting point (Tm) of 127 °C or more and 130 °C or less,
a crystallization temperature (Tc) of 111 °C or more and 115 °C or less, and
a crystallinity (Xc) of 55% or more and 70% or less.

9. The polyethylene composition according to Claim 1,
wherein the polyethylene composition comprises:
(a) a first ethylene-alpha olefin copolymer having a density of 0.930 g/cm³ to 0.960 g/cm³, a melt index (MI_{2.16}, at 190 °C under a load of 2.16 kg) of 0.2 g/10 min to 2.0 g/10 min, and a molecular weight distribution (Mw/Mn) of 5 or more to 8.7 or less; and
(b) a second ethylene-alpha olefin copolymer having a density of 0.870 g/cm³ to 0.920 g/cm³, a melt index (MI_{2.16}, at 190 °C under a load of 2.16 kg) of 3.0 g/10 min to 10.0 g/10 min, and a molecular weight distribution (Mw/Mn) of 2.0 or more to 4.0 or less;
wherein the polyethylene composition comprises (a) the first ethylene-alpha olefin copolymer in an amount of 60 wt% or more to 90 wt% or less, and (b) the second ethylene-alpha olefin copolymer in an amount of 10 wt% or more to 40 wt% or less.

10. The polyethylene composition according to Claim 9,
wherein (a) the first ethylene-alpha olefin copolymer has
a number average molecular weight (Mn) of 12000 g/mol or more to 50000 g/mol or less, and
a weight average molecular weight (Mw) of 100000 g/mol or more to 250000 g/mol or less.

11. The polyethylene composition according to Claim 9, wherein (a) the first ethylene-alpha olefin copolymer is an ethylene/1-hexene copolymer.

12. The polyethylene composition according to Claim 9,
wherein (b) the second ethylene-alpha olefin copolymer has
a number average molecular weight (Mn) of 20000 g/mol or more to 50000 g/mol or less, and
a weight average molecular weight (Mw) of 50000 g/mol or more to 100000 g/mol or less.

13. The polyethylene composition according to Claim 9, wherein (b) the second ethylene-alpha olefin copolymer is an ethylene/1-octene copolymer.

14. A biaxially stretched film comprising the polyethylene composition of Claim 1.

15. The biaxially stretched film according to Claim 14, wherein the film is stretched at a machine direction (MD) draw ratio of 4 or more and a traverse direction (TD) draw ratio of 7 or more.

16. The biaxially stretched film according to Claim 14, wherein the film has the average of the machine direction (MD) tensile strength and the traverse direction (TD) tensile strength of 150 MPa or more, measured in accordance with ASTM D 882.

17. The biaxially stretched film according to Claim 14, wherein the film has the average of the machine direction (MD) tensile modulus and the traverse direction (TD) tensile modulus of 600 MPa or more, measured in accordance with ASTM D 882.

18. The biaxially stretched film according to Claim 14, wherein the film has a puncture strength of 400 N/mm or more, measured in accordance with EN 14477.

19. The biaxially stretched film according to Claim 14, wherein the film has a dart drop impact strength (Face) of 490 g or more, measured by the Dart drop method A in accordance with ASTM D 1709.
